# EUROPEAN PATENT APPLICATION

(11) **EP 4 579 903 A1**
(43) Date of publication of application: **02.07.2025**
(21) Application number: 22965585.7
(22) Date of filing: 18.11.2022
(51) Int. Cl.: H01M 50/169

(54) **BATTERY CELL, BATTERY AND ELECTRIC DEVICE**

(71) Applicant: Contemporary Amperex Technology Co., Limited, Ningde, Fujian 352100 (CN)
(72) Inventor: LUO, Zhixin, Ningde, Fujian 352100 (CN); ZHU, Wenqi, Ningde, Fujian 352100 (CN); WEN, Yuqian, Ningde, Fujian 352100 (CN)
(74) Representative: Gong, Jinping
(86) International application number: PCT/CN2022/132976
(87) International publication number: WO 2024/103405

(57) **Abstract**

This application provides a battery cell, a battery, and an electrical device, and relates to the technical field of batteries. The battery cell includes a shell, an electrode terminal, and a first blocking piece. The electrode terminal is disposed on a wall portion of the shell. A sidewall of a receptacle of the electrode terminal includes a first weld face. The first blocking piece is at least partially accommodated in the receptacle. The first blocking piece includes a second weld face. A welding clearance is formed between the second weld face and the first weld face. The first blocking piece is welded to the electrode terminal to form a welding portion. The welding portion is at least partially located within the welding clearance. Because the welding portion does not exceed the first surface, the welding portion will not interfere with a busbar component when the busbar component is welded to the first surface, thereby forming a stable connection between the busbar component and the first surface, and improving the stability of electrical energy output by a battery containing the battery cell.

## Description

### TECHNICAL FIELD

This application relates to the technical field of batteries, and in particular, to a battery cell, a battery, and an electrical device.

### BACKGROUND

In the megatrend of pursuing energy conservation and emission reduction, batteries are widely used in electrical devices such as mobile phones, computers, and electric vehicles to provide electrical energy for the electrical devices. The stability of power supplied by a battery to an electrical device is essential to the implementation of the functionality of the electrical device. Therefore, how to enhance the stability of power supplied by the battery is a pressing technical challenge in this technical field.

### SUMMARY

Some embodiments of this application provide a battery cell, a battery, and an electrical device to improve the stability of electrical energy output by the battery.

According to a first aspect, an embodiment of this application provides a battery cell, including a shell, an electrode terminal, and a first blocking piece. The shell includes a wall portion. The electrode terminal is disposed on the wall portion. A receptacle is disposed on a surface of the electrode terminal, and the surface is oriented away from an interior of the battery cell along a thickness direction of the wall portion. A sidewall of the receptacle includes a first weld face. The first blocking piece is at least partially accommodated in the receptacle. The first blocking piece includes a second weld face. A welding clearance is formed between the second weld face and the first weld face. The first blocking piece is welded to the electrode terminal to form a welding portion. The welding portion is connected to the first weld face and the second weld face and at least partially located within the welding clearance.

In the above technical solution, the sidewall of the receptacle that accommodates the first blocking piece includes a first weld face. The first blocking piece includes a second weld face. The first blocking piece is welded to the electrode terminal to form a welding portion. The welding portion is connected to the first weld face and the second weld face and at least partially located within the welding clearance. Therefore, the welding portion may not extend out of the welding clearance along a direction away from the interior of the battery cell, or may extend out of the welding clearance by just a small amount along the direction away from the interior of the battery cell. In this way, in a case that the busbar component is connected to the first blocking piece to implement electrical connection between the battery cells, when the busbar component is connected to the first blocking piece (for example, by welding), because the welding portion does not exceed the welding clearance or exceeds the welding clearance by just very small amount, the interference between the welding portion and the busbar component is alleviated, and a stable connection can be favorably formed between the busbar component and the first blocking piece, thereby forming a stable electrical connection between the first blocking piece and the busbar component, and improving the stability of electrical energy output by the battery containing the battery cell.

In some embodiments in the first aspect of this application, the first blocking piece includes a first surface. The first surface is a surface, farthest away from the interior of the battery cell along the thickness direction of the wall portion, of the first blocking piece. The welding portion does not exceed the first surface.

In the above technical solution, the welding portion does not exceed the first surface. Therefore, in a case that the busbar component is connected to the first surface of the first blocking piece to implement electrical connection between the battery cells, because the welding portion does not exceed the first surface, the welding portion will not interfere with the busbar component in a process of connecting the busbar component to the first surface (for example, by welding). In this way, a stable connection is formed between the busbar component and the first surface, thereby forming a stable electrical connection between the first blocking piece and the busbar component, and improving the stability of electrical energy output by the battery containing the battery cell.

In some embodiments in the first aspect of this application, in the thickness direction of the wall portion, the welding clearance gradually increases along a direction away from the interior of the battery cell.

In the above technical solution, in the thickness direction of the wall portion, the welding clearance gradually increases along the direction away from the interior of the battery cell. Therefore, along the thickness direction of the wall portion, the dimension of the welding clearance is relatively large at an end close to the first surface, thereby providing a relatively large space for a welding gun, facilitating the welding gun to enter the welding clearance, and facilitating welding.

In some embodiments in the first aspect of this application, along the thickness direction of the wall portion, the electrode terminal includes a second surface farthest away from the interior of the battery cell. The receptacle is recessed from the second surface toward the interior of the battery cell. The first weld face is at an obtuse angle to the second surface.

In the above technical solution, the first weld face is at an obtuse angle to the second surface. Therefore, the receptacle forms a relatively large aperture at a position near the second surface, thereby facilitating the entry of the first blocking piece into the receptacle from the receptacle aperture on the second surface.

In some embodiments in the first aspect of this application, an angle between the first weld face and the second surface is θ, satisfying: 110° ≤ θ ≤ 160°.

In the above technical solution, if θ is overly small, the relatively large receptacle aperture formed at the position near the second surface is not a favorable option for the dimension of the electrode terminal of an actual product. If θ is overly large, a relatively large aperture of the receptacle can be formed at a position near the second surface to facilitate the entry of the first blocking piece into the receptacle, but the large aperture may impair the structural strength of the electrode terminal. Therefore, the angle falling within the range of 110° ≤ θ ≤ 160° not only produces a relatively large aperture of the receptacle at a position near the second surface and facilitates entry of the first blocking piece into the receptacle, but also makes the structural strength of the electrode terminal meet actual needs.

In some embodiments in the first aspect of this application, the first weld face is connected to the second surface.

In the above technical solution, the first weld face is connected to the second surface, so that the welding clearance extends from the second surface to the interior of the battery cell, thereby making the welding operation more convenient.

In some embodiments in the first aspect of this application, the first blocking piece includes the first surface. The first surface is a surface, farthest away from the interior of the battery cell along the thickness direction of the wall portion, of the first blocking piece. The first surface is flush with the second surface.

In the above technical solution, the first surface is flush with the second surface, thereby reducing the dimension of an integrated structure formed by the electrode terminal and the first blocking piece along the thickness direction of the wall portion, and in turn, reducing the dimension of the battery cell along the thickness direction of the wall portion.

In some embodiments in the first aspect of this application, the first weld face is a first conical face. Along the thickness direction of the wall portion, a large end of the first weld face is farther away from the interior of the battery cell than a small end of the first weld face.

In the above technical solution, the first weld face is a first conical face, and the large end of the first weld face is farther away from the interior of the battery cell than the small end of the first weld face. In this way, the size of the aperture of the receptacle is relatively large at a position near a side of the electrode terminal, the side being oriented away from the interior of the battery cell, thereby facilitating the entry of the first blocking piece into the receptacle.

In some embodiments in the first aspect of this application, the first conical face is a circular conical face.

In the above technical solution, the first conical face is a circular conical face, thereby making the processing operation easier. During the entry of the first blocking piece into the receptacle, the structure of the circular conical face keeps the same along the circumferential direction. Therefore, the requirement on the positioning precision of the first blocking piece relative to the receptacle is not high, thereby facilitating the assembling of the first blocking piece and the electrode terminal, and improving the assembling efficiency.

In some embodiments in the first aspect of this application, the first blocking piece includes a first surface. The first surface is a surface, farthest away from the interior of the battery cell along the thickness direction of the wall portion, of the first blocking piece. The second weld face is at an obtuse angle to the first surface.

In the above technical solution, the second weld face is at an obtuse angle to the first surface, thereby facilitating formation of a relatively wide opened welding clearance on a side oriented away from the interior of the battery cell, facilitating the entry of the welding gun into the welding clearance, and facilitating the welding between the electrode terminal and the first blocking piece.

In some embodiments in the first aspect of this application, the second weld face is connected to the first surface.

In the above technical solution, the second weld face is connected to the first surface, so that the welding clearance extends from the first surface to the interior of the battery cell, thereby making the welding operation more convenient.

In some embodiments in the first aspect of this application, the second weld face is a second conical face. Along the thickness direction of the wall portion, a small end of the second weld face is farther away from the interior of the battery cell than a large end of the second weld face.

In the above technical solution, the second weld face is a second conical face, and the small end of the second weld face is farther away from the interior of the battery cell than the large end of the second weld face, thereby facilitating formation of a relatively wide opened welding clearance, and facilitating the welding between the electrode terminal and the first blocking piece.

In some embodiments in the first aspect of this application, the first weld face is a first conical face. Along the thickness direction of the wall portion, a large end of the first weld face is farther away from the interior of the battery cell than a small end of the first weld face. The first blocking piece further includes a third conical face. The third conical face is disposed opposite to the first conical face. The third conical face is connected to a large end of the second conical face.

In the above technical solution, the first weld face is a first conical face, and the large end of the first weld face is farther away from the interior of the battery cell than the small end of the first weld face. The second conical face and a part of the first conical face form the welding clearance. In the thickness direction of the wall portion, the welding clearance gradually increases along the direction away from the interior of the battery cell. Therefore, the dimension of the welding clearance is relatively large at an end close to the first surface, thereby providing a relatively large space for a welding gun, facilitating the welding gun to enter the welding clearance, and facilitating welding. The third conical face is disposed opposite to the first conical face, thereby making the shape of the first blocking piece fit the shape of the receptacle more closely, and facilitating assembling.

In some embodiments in the first aspect of this application, the second conical face is a circular conical face; and/or the third conical face is a circular conical face.

In the above technical solution, during actual production, the circular conical face is easier to process. The second conical face and/or the third conical face is a circular conical face. Therefore, during the entry of the first blocking piece into the receptacle, the structure of the circular conical face keeps the same along the circumferential direction. Therefore, the requirement on the positioning precision of the first blocking piece relative to the receptacle is not high, thereby facilitating the assembling of the first blocking piece and the electrode terminal, and improving the assembling efficiency.

In some embodiments in the first aspect of this application, the first blocking piece further includes a first lateral face. The first lateral face is connected to the large end of the second weld face. The sidewall of the receptacle further includes a first lateral wall face. Along the thickness direction of the wall portion, the first lateral wall face is closer to the interior of the battery cell than the first weld face. The first lateral wall face is connected to one end of the first weld face, the end being close to the interior of the battery cell. The first lateral wall face is arranged opposite to the first lateral face. Both the first lateral wall face and the first lateral face are cylindrical faces extending along the thickness direction of the wall portion.

In the above technical solution, both the first lateral wall face and the first lateral face are cylindrical faces extending along the thickness direction of the wall portion. The cylindrical faces are easier to process.

In some embodiments in the first aspect of this application, along the thickness direction of the wall portion, a maximum dimension of the welding clearance is L, satisfying: 0.1 mm ≤ L ≤ 0.7 mm.

In the above technical solution, if L is greater than 0.1 mm, the dimension of the welding clearance along the thickness direction of the wall portion is relatively small. In order to prevent the welding portion from exceeding the first surface along the thickness direction of the wall portion, the dimension of the welding portion in the thickness direction of the wall portion is also relatively small, thereby possibly leading to insufficient welding strength. If L is greater than 0.7 mm, the dimension of the welding clearance along the thickness direction of the wall portion is relatively large, thereby increasing the difficulty of welding. Therefore, the value of L is set to fall within the range of 0.1 mm ≤ L ≤ 0.7 mm, thereby making the dimension of the welding portion meet the requirement on the welding strength for the electrode terminal and the first blocking piece, and making the welding less difficult.

In some embodiments in the first aspect of this application, the first blocking piece includes the first surface. The first surface is a surface, farthest away from the interior of the battery cell along the thickness direction of the wall portion, of the first blocking piece. A groove is further created on the first surface. The groove is arranged around an axis parallel to the thickness direction of the wall portion.

In the above technical solution, the groove can release the welding stress during the welding of the electrode terminal and the first blocking piece, improve the welding quality, and alleviate the deformation of the first blocking piece and the electrode terminal during the welding.

In some embodiments in the first aspect of this application, the receptacle is a stepped groove. The receptacle includes a first receptacle section and a second receptacle section connected to each other. The first receptacle section is farther away from the interior of the battery cell than the second receptacle section. At least a part of the first blocking piece is accommodated in the first receptacle section. The first weld face is at least a part of a sidewall of the first receptacle section.

In the above technical solution, the receptacle is a stepped groove, thereby not only reducing the dimension of the electrode terminal along the thickness direction of the wall portion, facilitating the welding of the electrode terminal to a tab inside the battery cell, but also reducing the weight of the electrode terminal, and in turn, reducing the weight of the battery cell.

In some embodiments in the first aspect of this application, the first blocking piece includes a body portion and an extension portion connected to each other. The body portion is accommodated in the first receptacle section and abuts against a bottom wall of the first receptacle section. The extension portion extends from the body portion into the second receptacle section. The second weld face is at least a part of an outer peripheral surface of the body portion.

In the above technical solution, the body portion is accommodated in the first receptacle section and abuts against the bottom wall of the first receptacle section, thereby restricting the first blocking piece from further moving closer to the interior of the battery cell in the thickness direction of the wall portion, and facilitating electrical connection between the busbar component and the first blocking piece. The extension portion extends from the body portion into the second receptacle section, and is in positional fit with the second receptacle section, thereby favorably maintaining a stable relative positional relationship between the first blocking piece and the electrode terminal.

In some embodiments in the first aspect of this application, the extension portion includes a second lateral face and a third surface closest to the interior of the battery cell along the thickness direction of the wall portion. The second lateral face is connected to the third surface by a bevel face.

In the above technical solution, the third surface is connected to the second lateral face by a bevel face. The bevel face not only eliminates the burrs at the end of the extension portion, but also plays a guiding role when the first blocking piece enters the receptacle, and makes the first blocking piece enter the receptacle smoothly.

In some embodiments in the first aspect of this application, a sidewall of the second receptacle section is spaced apart from an outer peripheral surface of the extension portion.

In the above technical solution, the sidewall of the second receptacle section is spaced apart from the outer peripheral surface of the extension portion, thereby facilitating the assembling of the first blocking piece and the electrode terminal.

In some embodiments in the first aspect of this application, a distance between the sidewall of the second receptacle section and the outer peripheral surface of the extension portion is h, satisfying: 0.03 mm ≤ h ≤ 0.1 mm.

In the above technical solution, if h is less than 0.03 mm, the distance between the sidewall of the second receptacle section and the outer peripheral surface of the extension portion is overly small and hardly controllable, imposes a higher requirement on the processing precision of the first blocking piece and the electrode terminal, and increases the difficulty of processing. If h is greater than 0.1 mm, the distance between the sidewall of the second groove section and the outer peripheral surface of the extension portion is overly large, thereby being prone to a relatively large displacement toward one side during the welding of the first blocking piece and the electrode terminal, making the welding uneven, and impairing the welding quality. Therefore, the value of h is set to fall within the range of 0.03 mm ≤ h ≤ 0.1 mm, thereby making the distance between the sidewall of the second receptacle section and the outer peripheral surface of the extension portion fall within an easily controllable range, and also making the space relatively small in which the first blocking piece is movable in the second receptacle section during the welding of the electrode terminal and the first blocking piece, and in turn, improving the evenness and quality of the welding.

In some embodiments in the first aspect of this application, along the thickness direction of the wall portion, a dimension of the body portion is n, satisfying: 0.7 mm ≤ n ≤ 1.5 mm.

In the above technical solution, if n is less than 0.7 mm, the strength of the body portion is not enough to meet the actual use requirements. If n is greater than1.5 mm, the dimension of the body portion along the thickness direction of the wall portion is overlarge, thereby increasing the size of the battery cell. Therefore, the value of n is set to fall within the range of 0.7 mm ≤ n ≤ 1.5 mm, thereby not only making the dimension of the battery cell along the thickness direction of the wall portion fall within a reasonable range, but also ensuring sufficient structural strength of the body portion.

In some embodiments in the first aspect of this application, an injection hole is created on the electrode terminal. The injection hole communicates with the receptacle and the interior of the battery cell.

In the above technical solution, the injection hole is created on the electrode terminal, thereby making the processing operation more convenient, and avoiding positioning of the injection hole on the shell that impairs the structural strength of the shell.

In some embodiments in the first aspect of this application, the battery cell further includes a second blocking piece. At least a part of the second blocking piece is inserted in the injection hole to block the injection hole.

In the above technical solution, the second blocking piece blocks the injection hole, thereby reducing the risk of an electrolyte leak of the battery cell, and reducing the risk that the welding slag falls from the injection hole into the battery cell during the welding of the first blocking piece and the electrode terminal. The second blocking piece can also play a role in heat insulation and reduce the damage caused by high temperature to the internal structure and materials of the battery cell during the welding of the first blocking piece and the electrode terminal.

In some embodiments in the first aspect of this application, the second blocking piece includes a blocking portion and a constraining portion. The blocking portion is inserted in the injection hole. The constraining portion is connected to one end of the blocking portion and located in the receptacle. The constraining portion is configured to abut against a bottom wall of the receptacle.

In the above technical solution, the constraining portion of the second blocking piece abuts against the bottom wall of the receptacle, thereby constraining the second blocking piece from moving toward the interior of the battery cell, and reducing the risk that the second blocking piece falls into the interior of the battery cell.

In some embodiments in the first aspect of this application, a clearance portion is disposed on the first blocking piece. The clearance portion is configured to accommodate a part of the second blocking piece.

In the above technical solution, the clearance portion can reduce the risk of interference between the second blocking piece and the first blocking piece. The clearance portion accommodates a part of the second blocking piece, that is, a part of the second blocking piece is embedded in the first blocking piece, thereby reducing the size of the integrated structure formed by the first blocking piece and the second blocking piece.

According to a second aspect, an embodiment of this application further provides a battery, including the battery cell disclosed in an embodiment of the first aspect.

In the above technical solution, a welding portion is formed by welding the electrode terminal to the first blocking piece in the battery cell disclosed in an embodiment of the first aspect, and the welding portion does not exceed the first surface of the first blocking piece. Therefore, in a process of connecting the busbar component to the first surface (for example, by welding), the welding portion will not interfere with the busbar component. In this way, a stable connection is formed between the busbar component and the first surface, thereby forming a stable electrical connection between the first blocking piece and the busbar component, and improving the stability of electrical energy output by the battery.

According to a third aspect, an embodiment of this application further provides an electrical device, including the battery disclosed in an embodiment of the second aspect.

In the above technical solution, the battery disclosed in an embodiment of the second aspect can stably output electric energy, thereby ensuring the electrical device to work stably.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic diagram of welding a first blocking piece and a busbar component in the related art;
FIG. 2 is a schematic structural diagram of a vehicle according to some embodiments of this application;
FIG. 3 is an exploded view of a battery according to some embodiments of this application;
FIG. 4 is an exploded view of a battery cell according to some embodiments of this application;
FIG. 5 is a schematic diagram of a wall portion, an electrode terminal, and a first blocking piece assembled together according to some embodiments of this application;
FIG. 6 is a close-up view of a part A shown in FIG. 5;
FIG. 7 is a schematic structural diagram of the electrode terminal and first blocking piece shown in FIG. 5 that are welded together;
FIG. 8 is a close-up view of a part B shown in FIG. 7;
FIG. 9 is a schematic structural diagram of an electrode terminal according to some embodiments of this application;
FIG. 10 is a schematic structural diagram of an electrode terminal and a first blocking piece welded together according to some other embodiments of this application;
FIG. 11 is a close-up view of a part C shown in FIG. 10;
FIG. 12 is a cross-sectional view of an electrode terminal according to some embodiments of this application;
FIG. 13 is a schematic diagram of an electrode terminal and a first blocking piece welded together according to still some other embodiments of this application;
FIG. 14 is a schematic diagram of an electrode terminal and a first blocking piece welded together according to still some other embodiments of this application;
FIG. 15 is a cross-sectional view of a first blocking piece according to some embodiments of this application;
FIG. 16 is a cross-sectional view of a first blocking piece according to some other embodiments of this application;
FIG. 17 is a schematic diagram of an electrode terminal and a first blocking piece welded together according to still some other embodiments of this application;
FIG. 18 is a close-up view of a part D shown in FIG. 17;
FIG. 19 is a schematic diagram of an electrode terminal and a first blocking piece welded together according to still some other embodiments of this application;
FIG. 20 is a close-up view of a part E shown in FIG. 19;
FIG. 21 is a schematic diagram of an electrode terminal and a first blocking piece welded together according to still some other embodiments of this application;
FIG. 22 is a close-up view of a part F shown in FIG. 21;
FIG. 23 is a schematic diagram of an electrode terminal and a first blocking piece assembled together according to still some embodiments of this application;
FIG. 24 is a close-up view of a part G shown in FIG. 23;
FIG. 25 is a schematic diagram of fitting an electrode terminal to a first blocking piece according to still some other embodiments of this application;
FIG. 26 is a schematic structural diagram of an electrode terminal and a first blocking piece fitted together according to still some other embodiments of this application; and
FIG. 27 is a schematic structural diagram of an electrode terminal and a first blocking piece fitted together according to still some other embodiments of this application.

List of reference numerals: 1000-vehicle; 100-battery; 10-box; 11-first part; 12-second part; 20-battery cell; 21-shell; 211', 211-wall portion; 2111-mounting hole; 212 -housing; 2121-opening; 213-end cap; 22', 22-electrode terminal; 221', 221-receptacle; 2211-first weld face; 2212-first lateral wall face; 2213-first receptacle section; 2214-second receptacle section; 222-first abutment portion; 223-second abutment portion; 224-connecting portion; 225-annular snap slot; 226-second surface; 227-first transitional face; 228-injection hole; 23-insulator; 30', 30-first blocking piece; 31', 31-first surface; 32-second weld face; 33-second transitional face; 34-third conical face; 35-first lateral face; 36-groove; 361-first section; 362-second section; 37-body portion; 38-extension portion; 381-second lateral face; 382-third surface; 383-bevel face; 39-clearance portion; 40-welding clearance; 50', 50-welding portion; 60-electrode assembly; 61-tab; 70-second blocking piece; 71-blocking portion; 72-constraining portion; 200-controller; 300-motor; X-thickness direction of wall portion; Y1-first intersection line; Y2-second intersection line; Y3-third intersection line; Y4-fourth intersection line; 400'-busbar component.

### DETAILED DESCRIPTION OF EMBODIMENTS

To make the objectives, technical solutions, and advantages of some embodiments of this application clearer, the following gives a clear and complete description of the technical solutions in some embodiments of this application with reference to the drawings in some embodiments of this application. Apparently, the described embodiments are merely a part of but not all of the embodiments of this application. Generally, the components of some embodiments of this application, which are described and illustrated in the drawings hereto, may be arranged and designed in a variety of different configurations.

Therefore, the following detailed description of some embodiments of this application provided with reference to the drawings is not intended to limit the scope of this application as claimed, but merely represents selected embodiments of this application. All other embodiments derived by a person of ordinary skill in the art based on the embodiments of this application without making any creative efforts still fall within the protection scope of this application.

It is hereby noted that to the extent that no conflict occurs, embodiments of this application and the features in the embodiments may be combined with each other.

It is hereby noted that similar reference numerals and letters indicate similar items in the following drawings. Therefore, once an item is defined in one drawing, the item does not need to be further defined or construed in subsequent drawings.

In the description of the embodiments of this application, it is hereby noted that an indicated direction or positional relationship is a direction or positional relationship based on illustration in the drawings, or a direction or positional relationship by which a product in use according to this application is usually placed, or a direction or positional relationship commonly understood by a person skilled in the art, and is merely intended for ease or brevity of describing this application, but does not indicate or imply that the indicated apparatus or component is necessarily located in the specified direction or constructed or operated in the specified direction. Therefore, the indicated direction or positional relationship is never to be understood as a limitation on this application. In addition, the terms "first", "second", "third", and so on are merely used for differentiated description, but not to be understood as indicating or implying order of precedence.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries 100 keeps soaring with the expansion of the application fields of the power batteries.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

"A plurality of" referred to in this application means two or more (including two).

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The shape of the battery cell is not limited herein. Depending on the form of packaging, the battery cell is typically classed into three types: cylindrical battery cell, prismatic battery cell, and pouch-type battery cell, without being limited in embodiments of this application.

In an embodiment in which the battery includes a plurality of battery cells, the plurality of battery cells may be connected in series, parallel, or series-and-parallel pattern by a busbar component. The series-and-parallel pattern means a combination of series connection and parallel connection of the plurality of battery cells.

A battery cell 20' includes a shell 21', an electrode terminal 22', and an electrode assembly 60'. The electrode assembly 60' is accommodated in the shell 21'. The electrode terminal 22' is disposed on a wall portion 211' of the shell 21'. The electrode terminal 22' is configured to be electrically connected to the electrode assembly 60'. A busbar component 400' is electrically connected to the electrode terminal 22' of the battery cell 20' to implement series, parallel, or series-and-parallel connection of the plurality of battery cells 20.

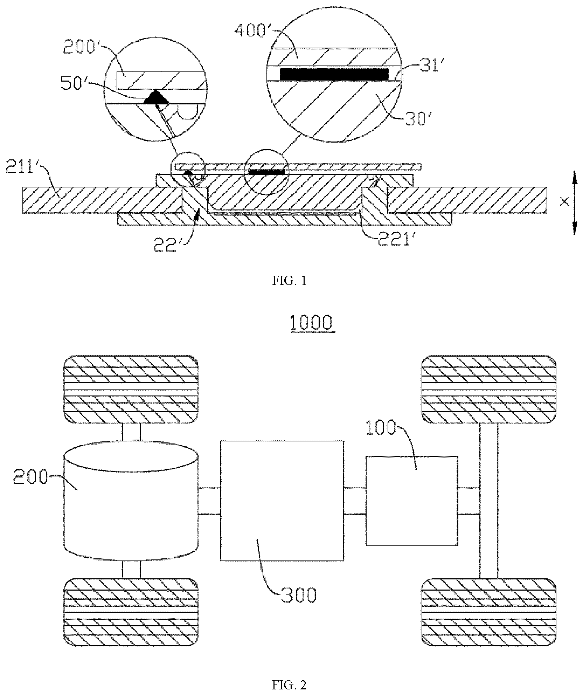

As shown in FIG. 1, the busbar component 400' is typically not directly connected to the electrode terminal 22'. Instead, a first blocking piece 30' is welded onto the electrode terminal 22', and the busbar component 400' is directly connected to the first blocking piece 30', so that the electrode terminal 22' is electrically connected to the busbar component 400' by the first blocking piece 30'. In order to reduce the size of an integrated structure formed by the electrode terminal 22' and the first blocking piece 30', a receptacle 221' is disposed on a surface of the electrode terminal 22', where the surface is oriented away from the interior of the battery cell 20' along a thickness direction X of the wall portion. At least a part of the first blocking piece 30' is accommodated in the receptacle 221'. Along the thickness direction X of the wall portion, a first surface 31', farthest away from the interior of the battery cell 20', of the first blocking piece 30', is configured to be welded to the busbar component 400' to implement the electrical connection.

The inventor hereof finds that, as shown in FIG. 1, after the first blocking piece 30' is welded to the electrode terminal 22', a welding portion 50' is formed. The welding portion 50' protrudes beyond the first surface 31' of the first blocking piece 30'. During welding of the busbar component 400' to the first surface 31', the busbar component 400' props one side of the busbar component 400', the side being oriented toward the first blocking piece 30'. This impairs the quality of welding between the busbar component 400' and the first blocking piece 30', and may lead to a cold solder joint between the busbar component 400' and the first surface 31', thereby making the electrical connection between the first blocking piece 30' and the busbar component 400' unstable or even failed.

Based on the above considerations, in order to alleviate the potential problem of a cold solder joint between the busbar component and the first surface caused by the phenomenon that the welding portion formed by the welding of the electrode terminal and the first blocking piece protrudes beyond the first surface of the first blocking piece, the inventor designs a battery cell after in-depth research. In the battery cell, along the thickness direction of the wall portion of the shell, a first weld face is included on a sidewall of a receptacle disposed on a surface of the electrode terminal, the surface being oriented away from the interior of the battery cell. The first blocking piece includes a second weld face. A welding clearance is formed between the second weld face and the first weld face. The first blocking piece is welded to the electrode terminal to form a welding portion. The welding portion is connected to the first weld face and the second weld face, and is at least partially located in the welding clearance.

The sidewall of the receptacle that accommodates the first blocking piece includes a first weld face. The first blocking piece includes a second weld face. The first blocking piece is welded to the electrode terminal to form a welding portion. The welding portion is connected to the first weld face and the second weld face and at least partially located within the welding clearance. Therefore, the welding portion may not extend out of the welding clearance along a direction away from the interior of the battery cell, or extends out of the welding clearance by just a small amount along the direction away from the interior of the battery cell. In this way, in a case that the busbar component is connected to the first blocking piece to implement electrical connection between the battery cells, due to the fact that the welding portion does not exceed the first surface, when the busbar component is connected to the first blocking piece (for example, by welding), because the welding portion does not exceed the welding clearance or exceeds the welding clearance by just very small amount, the interference between the welding portion and the busbar component is alleviated, and a stable connection can be favorably formed between the busbar component and the first blocking piece, thereby forming a stable electrical connection between the first blocking piece and the busbar component, and improving the stability of electrical energy output by the battery containing the battery cell.

The battery cell disclosed in this embodiment of this application is applicable to, but without being limited to, electrical devices such as a vehicle, watercraft, or aircraft. A power supply system of the electrical devices may be formed by using the battery cell, the battery, and the like disclosed herein, so as to improve the stability of electrical energy output by the battery.

An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1000 is used as an example of the electrical device according to an embodiment of this application.

Referring to FIG. 2, FIG. 2 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

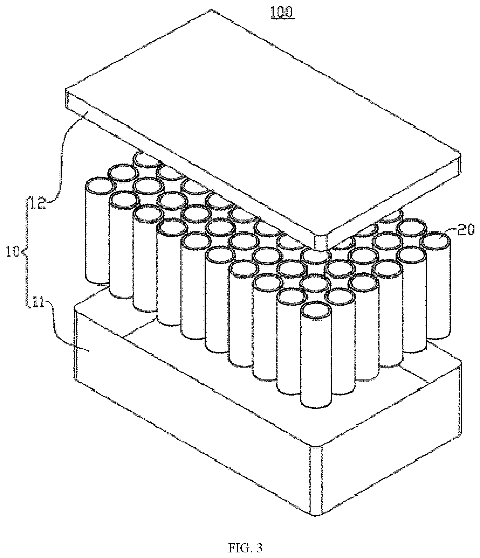

Referring to FIG. 3, FIG. 3 is an exploded view of a battery 100 according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end to form an accommodation cavity for accommodating the battery cell 20. The first part 11 may be a plate-like structure. The first part 11 fits the opening of the second part 12 so that the first part 11 and the second part 12 together define the accommodation space. Alternatively, both the first part 11 and the second part 12 may be hollow structures opened at one side to form an accommodation cavity for accommodating the battery cell 20. The opening of the first part 11 fits the opening of the second part 12. Definitely, the box 10 formed by the first part 11 and the second part 12 may be in various shapes, such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the box 10. The battery 100 may further include other structures. For example, the battery 100 may include a busbar component (not shown in FIG. 2). The busbar component is configured to implement an electrical connection between the plurality of battery cells 20.

Each battery cell 20 may be, but is not limited to, a secondary battery or primary battery; or, may be a lithium-sulfur battery, a sodium-ion battery, or a magnesium-ion battery. The battery cell 20 may be in a shape such as a cylinder, a flat body, a cuboid, or other shapes.

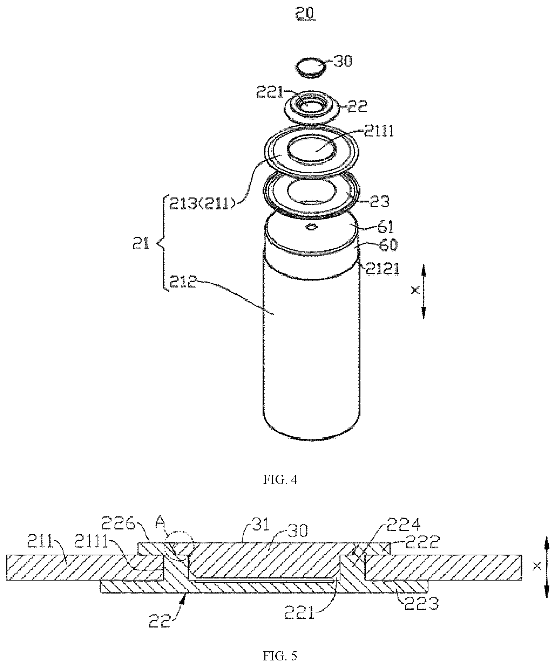

As shown in FIG. 4 to FIG. 8, in some embodiments, the battery cell 20 includes a shell 21, an electrode terminal 22, and a first blocking piece 30. The shell 21 includes a wall portion 211. The electrode terminal 22 is disposed on the wall portion 211. A receptacle 221 is disposed on a surface of the electrode terminal 22, and the surface is oriented away from the interior of the battery cell 20 along a thickness direction X of the wall portion. A sidewall of the receptacle 221 includes a first weld face 2211. The first blocking piece 30 is at least partially accommodated in the receptacle 221. The first blocking piece 30 includes a second weld face 32. A welding clearance 40 is formed between the second weld face 32 and the first weld face 2211. The first blocking piece 30 is welded to the electrode terminal 22 to form a welding portion 50. The welding portion 50 is connected to the first weld face 2211 and the second weld face 32 and at least partially located within the welding clearance 40.

As shown FIG. 4, the shell 21 includes a housing 212 and an end cap 213. The housing 212 includes an opening 2121 at one end. The end cap 213 is configured to seal the opening 2121 of the housing 212, so that the end cap 213 and the housing 212 together form an accommodation space configured to accommodate the electrode assembly 60. Without limitation, the shape of the end cap 213 may be adapted to the shape of the housing 212 to fit the housing 212. Optionally, the end cap 213 may be made of a material of appropriate hardness and strength (such as aluminum alloy), so that the end cap 213 is not prone to deform when squeezed or impacted. In this way, the battery cell 20 achieves higher structural strength and higher safety performance.

The housing 212 is a component configured to fit the end cap 213 to form an internal environment of the battery cell 20. The formed internal environment may be used to accommodate the electrode assembly 60, an electrolytic solution, and other components. The housing 212 and the end cap 213 may be stand-alone components. An opening 2121 may be created on the housing 212. At the opening 2121, the end cap 213 fits and covers the opening 2121 to form the internal environment of the battery cell 20. Without limitation, the end cap 213 and the housing 212 may be integrated instead. Specifically, the end cap 213 and the housing 212 may form a common connection interface before other components are put into the housing. Subsequently, when the interior of the housing 212 needs to be sealed, the end cap 213 is made to fit with the housing 212. The housing 212 may be in various shapes and sizes, such as a cuboid, cylinder, or hexagonal prism. Specifically, the shape of the housing 212 may depend on the specific shape and size of the electrode assembly 60. The housing 212 may be made of a variety of materials such as copper, iron, aluminum, stainless steel, aluminum alloy, or plastic, without being particularly limited herein.

The electrode assembly 60 is a component in which electrochemical reactions occur in the battery cell 20. The housing 212 may contain one or more electrode assemblies 60. The electrode assembly 60 is typically formed of a positive electrode plate and a negative electrode plate that are wound or stacked together. Generally, a separator is disposed between the positive electrode plate and the negative electrode plate. The parts, coated with an active material, of the positive electrode plate and the negative electrode plate, constitute a main portion of the electrode assembly 60. The part, coated with no active material, of the positive electrode plate and the negative electrode plate separately, constitutes a tab 61. The positive tab 61 and the negative tab 61 may be located at one end of the main portion together or at two ends of the main portion respectively. In a charge-discharge process of the battery 100, the positive active material and the negative active material react with an electrolytic solution. The tabs 61 are connected to electrode terminals 22 to form a current circuit.

The wall portion 211 on which the electrode terminal 22 is disposed may be an end cap 213, or may be a wall of the housing 212. FIG. 4 shows a scenario in which the electrode terminal 22 is disposed on the end cap 213, that is, the end cap 213 is the wall portion 211 on which the electrode terminal 22 is disposed.

The electrode terminal 22 is a functional component. The electrode terminal 22 may be configured to be electrically connected to an electrode assembly 60 accommodated in the shell 21, so as to output or input electrical energy of the battery cell 20.

In an embodiment, the wall portion 211 on which the electrode terminal 22 is disposed is the end cap 213. In this case, a pressure relief mechanism may be further disposed on the end cap 213, and the pressure relief mechanism is configured to release an internal pressure when the internal pressure or temperature of the battery cell 20 reaches a threshold. The end cap 213 may also be made of a variety of materials such as copper, iron, aluminum, stainless steel, aluminum alloy, or plastic, and the materials are not particularly limited herein. In some embodiments, an insulator 23 may be further disposed on an inner side of the end cap 213. The insulator 23 may be configured to isolate an electrically connected component 224 in the housing 212 from the end cap 213 to reduce the risk of a short circuit. For example, the insulator 23 may be plastic, rubber, or the like.

As shown in FIG. 4, FIG. 5, and FIG. 7, a mounting hole 2111 is created on the wall portion 211. Along the thickness direction X of the wall portion, the mounting hole 2111 penetrates both sides of the wall portion 211. The mounting hole 2111 may be in various shapes. For example, the mounting hole 2111 is a circular hole, a square hole, a conical hole, or the like. FIG. 4, FIG. 5, and FIG. 7 show a scenario in which the mounting hole 2111 is a circular hole.

The electrode terminal 22 is threaded through the mounting hole 2111. The electrode terminal 22 includes a first abutment portion 222, a second abutment portion 223, and a connecting portion 224. Along the thickness direction X of the wall portion, both ends of the connecting portion 224 are connected to the first abutment portion 222 and the second abutment portion 223 respectively. The first abutment portion 222 extends around the connecting portion 224 peripherally, and protrudes beyond the outer peripheral surface of the connecting portion 224. The second abutment portion 223 extends around the connecting portion 224 peripherally, and protrudes beyond the outer peripheral surface of the connecting portion 224. The first abutment portion 222, the second abutment portion 223, and the connecting portion 224 together form an annular snap slot 225. The wall portion 211 is snap-fitted in the annular snap slot 225. The connecting portion 224 is threaded through the mounting hole 2111. The first abutment portion 222 and the second abutment portion 223 are located on two sides of the wall portion 211 respectively. The first abutment portion 222 and the second abutment portion 223 abut against two opposite surfaces of the wall portion 211 respectively to play a constraining role and dispose the electrode terminal 22 stably on the wall portion 211. The structural shape of the connecting portion 224 may match the structural shape of the mounting hole 2111. For example, if the mounting hole 2111 is a circular hole, the connecting portion 224 may be a cylindrical structure; if the mounting hole 2111 is a circular conical hole, the connecting portion 224 may be circular conical structure. The second abutment portion 223 is located on one side of the wall portion 211, the side being oriented toward the interior of the battery cell 20. The first abutment portion 222 is located on one side of the wall portion 211, the side being oriented away from the interior of the battery cell 20. The first abutment portion 222 and the second abutment portion 223 may assume various structural forms. For example, the first abutment portion 222 is a ring structure, and the second abutment portion 223 is a disc structure. The first abutment portion 222 and the second abutment portion 223 may assume the same structure or different structures. FIG. 3 shows a scenario in which the first abutment portion 222 is a ring structure, the second abutment portion 223 is a disc structure, and the outer diameter of the first abutment portion 222 is smaller than the outer diameter of the second abutment portion 223.

The first abutment portion 222, the second abutment portion 223, and the connecting portion 224 may be disposed separately and then connected, for example, by welding, bonding, or other means, to form an integrated structure. Alternatively, the first abutment portion 222, the second abutment portion 223, and the connecting portion 224 may be formed in one piece, for example, by stamping, casting, or other means. The first abutment portion 222 may be a flange structure formed by a part of the connecting portion 224, the part extending out of the mounting hole 2111.

One electrode terminal 22 may be disposed dielectrically on the wall portion 211. Of a positive tab or a negative tab of the electrode assembly 60, one may be electrically connected to the electrode terminal 22, and the other may be electrically connected to the housing 212.

In some other embodiments, two electrode terminals 22 may be dielectrically disposed on the wall portion 211. The two electrode terminals 22 are electrically connected to the positive tab and the negative tab of the electrode assembly 60 respectively.

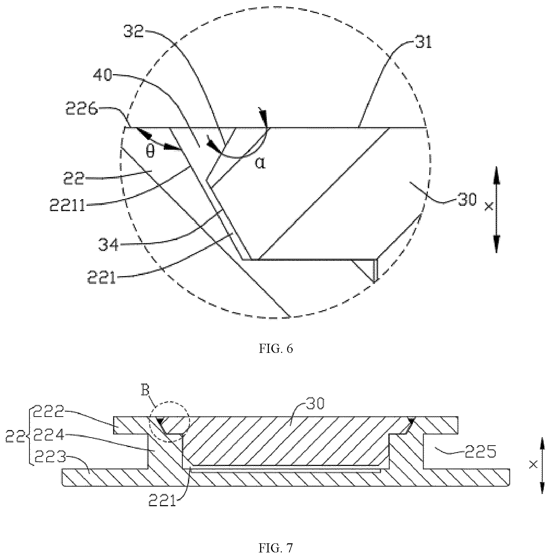

In the thickness direction X of the wall portion, the receptacle 221 is recessed from a surface of the electrode terminal 22 toward the interior of the battery cell 20, the surface being farthest away from the interior of the battery cell 20. The receptacle 221 may extend to one side of the surface of the electrode terminal 22, the surface being oriented toward the interior of the battery cell 20. In other words, along the thickness direction X of the wall portion, the receptacle 221 penetrates the two opposite sides of the electrode terminal 22 to form a through hole. Alternatively, as shown in FIG. 6 and FIG. 7, the receptacle 221 does not extend to one side of the surface of the electrode terminal 22, the surface being oriented toward the interior of the battery cell 20.

A sidewall of the receptacle 221 means a wall face other than the bottom wall of the receptacle 221. The bottom wall of the receptacle 221 means a wall face, perpendicular to the thickness direction X of the wall portion, of the receptacle 221. The first weld face 2211 is at least a part of the sidewall of the receptacle 221.

The first blocking piece 30 may be fully accommodated in the receptacle 221, or just partially accommodated in the receptacle 221. The first blocking piece 30 includes a first surface 31. The first surface 31 is a surface, farthest away from the interior of the battery cell 20 along the thickness direction X of the wall portion, of the first blocking piece 30. The first surface 31 may be located in the receptacle 221 or outside the receptacle 221.

Alternatively, along the thickness direction X of the wall portion, the first surface 31 may be flush with the surface, farthest away from the interior of the battery cell 20, of the electrode terminal 22. The busbar component (not shown in FIG. 4 to FIG. 8) may be welded to or abut the first surface 31 to implement an electrical connection between the busbar component and the first blocking piece 30. A projection of the second weld face 32 in a plane parallel to the thickness direction X of the wall portion at least partially overlaps a projection of the first weld face 2211 in a plane parallel to the direction of the wall portion 211. A welding clearance 40 is formed in the overlapping region of the projections of the first weld face 2211 and the second weld face 32. The electrode terminal 22 is welded to the first blocking piece 30 within the welding clearance 40. The welding portion 50 may be fully located within the welding clearance 40; or, a part of the welding portion 50 is accommodated in the welding clearance 40, and another part of the welding portion extends out of the welding clearance 40 along a direction away from the interior of the battery cell 20 in the thickness direction X of the wall portion.

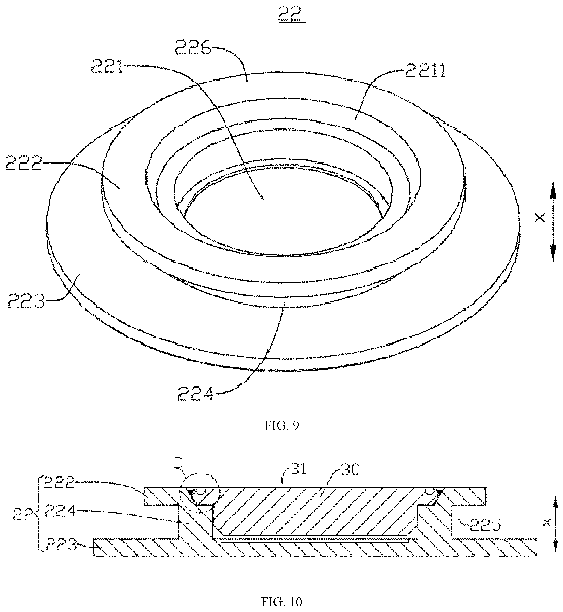

As shown in FIG. 9, in some embodiments, the first weld face 2211 may be a closed-ring surface arranged around an axis parallel to the thickness direction X of the wall portion, and the second weld face 32 may be a closed-ring surface arranged around an axis parallel to the thickness direction X of the wall portion. Therefore, the welding clearance 40 may be an annular clearance around the axis parallel to the thickness direction X of the wall portion, and the welding portion 50 may be an annular structure located in the welding clearance 40 and consistent with the extension tendency of the welding clearance 40. In this way, the welding portion 50 can not only connect the electrode terminal 22 and the first blocking piece 30, but also play a role in sealing between the first blocking piece 30 and the electrode terminal 22.

The sidewall of the receptacle 221 that accommodates the first blocking piece 30 includes a first weld face 2211. The first blocking piece 30 includes a second weld face 32. The first blocking piece 30 is welded to the electrode terminal 22 to form a welding portion 50. The welding portion 50 is connected to the first weld face 2211 and the second weld face 32 and at least partially located within the welding clearance 40. Therefore, the welding portion 50 may not extend out of the welding clearance 40 along a direction away from the interior of the battery cell 20, or may extend out of the welding clearance 40 by just a small amount along the direction away from the interior of the battery cell 20. In this way, in a case that the busbar component is connected to the first blocking piece 30 to implement electrical connection between the battery cells 20, when the busbar component is connected to the first blocking piece 30 (for example, by welding), because the welding portion 50 does not exceed the welding clearance 40 or exceeds the welding clearance 40 by just a very small amount, the interference between the welding portion 50 and the busbar component is alleviated, and a stable connection can be formed between the busbar component and the first blocking piece 30, thereby forming a stable electrical connection between the first blocking piece 30 and the busbar component, and improving the stability of electrical energy output by the battery 100 containing the battery cell 20.

In some embodiments, the first blocking piece 30 includes a first surface 31. The first surface 31 is a surface, farthest away from the interior of the battery cell 20 along the thickness direction X of the wall portion, of the first blocking piece 30. The welding portion 50 does not exceed the first surface 31.

The welding clearance 40 is of a specified depth along the thickness direction X of the wall portion. The welding portion 50 is located in the welding clearance 40, so that the welding portion 50 does not exceed the first surface 31 in the thickness direction X of the wall portion. Along the thickness direction X of the wall portion, one end, farthest away from the interior of the battery cell 20, of the welding portion 50 may be flush with the first surface 31; or, along the thickness direction X of the wall portion, one end, farthest away from the interior of the battery cell 20, of the welding portion 50 is closer to the interior of the battery cell 20 than the first surface 31, so that the welding portion 50 does not exceed the first surface 31 along a direction away from the battery cell 20.

The welding portion 50 does not exceed the first surface 31. Therefore, in a case that the busbar component is connected to the first surface 31 of the first blocking piece 30to implement electrical connection between the battery cells 20, because the welding portion 50 does not exceed the first surface 31, the welding portion 50 will not interfere with the busbar component in a process of connecting the busbar component to the first surface 31 (for example, by welding). In this way, a stable connection is formed between the busbar component and the first surface 31, thereby forming a stable electrical connection between the first blocking piece 30 and the busbar component, and improving the stability of electrical energy output by the battery containing the battery cell 20.

In some embodiments, the welding clearance 40 is a structure of an equalized size. The size of the welding clearance 40 means a distance between the first weld face 2211 and the second weld face 32 along a direction perpendicular to the thickness direction X of the wall portion. The sizes at all positions on the welding clearance 40 are equalized, thereby facilitating control of the size of the welding portion 50, facilitating welding, and improving the welding quality.

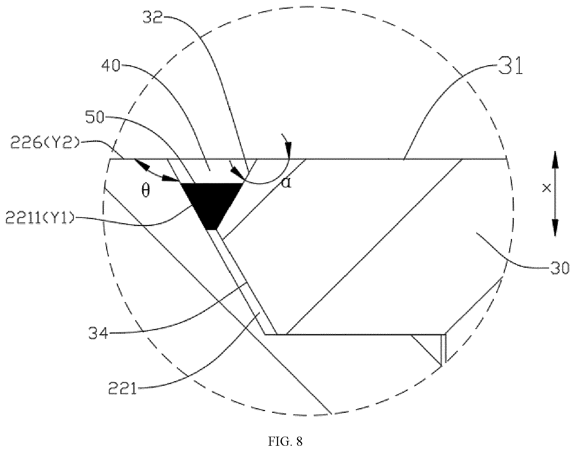

As shown in FIG. 6 and FIG. 8, in some other embodiments, in the thickness direction X of the wall portion, the welding clearance 40 gradually increases along a direction away from the interior of the battery cell 20.

To be specific, along the thickness direction X of the wall portion, the welding clearance 40 is a structure of an unequalized size. The distance between the first weld face 2211 and the second weld face 32 gradually increases along a direction away from the interior of the battery cell 20. Therefore, the size of the welding clearance 40 at one end away from the interior of the battery cell 20 is larger than the size of the welding clearance 40 at one end close to the interior of the battery cell 20.

Therefore, in the thickness direction X of the wall portion, the welding clearance 40 gradually increases along the direction away from the interior of the battery cell 20. Therefore, along the thickness direction X of the wall portion, the dimension of the welding clearance 40 is relatively large at an end close to the first surface 31, thereby providing a relatively large space for a welding gun, facilitating the welding gun to enter the welding clearance 40, and facilitating welding.

As shown in FIG. 6, FIG. 7, FIG. 8, and FIG. 9, in some embodiments, along the thickness direction X of the wall portion, the electrode terminal 22 includes a second surface 226 farthest away from the interior of the battery cell 20. The receptacle 221 is recessed from the second surface 226 toward the interior of the battery cell 20. The first weld face 2211 is at an obtuse angle to the second surface 226.

The receptacle 221 is recessed from the second surface 226 toward the interior of the battery cell 20, so that the receptacle 221 forms an aperture on the second surface 226. The second surface 226 and the first surface 31 may be coplanar. In this embodiment, the first blocking piece 30 may be fully accommodated in the receptacle 221. Alternatively, along the thickness direction X of the wall portion, the second surface 226 is closer to the interior of the battery cell 20 than the first surface 31. In this embodiment, a part of the first blocking piece 30 is accommodated in the receptacle 221. Alternatively, along the thickness direction X of the wall portion, the first surface 31 is closer to the interior of the battery cell 20 than the second surface 226. In this embodiment, the first blocking piece 30 may be fully accommodated in the receptacle 221. FIG. 6, FIG. 7, and FIG. 8 show a scenario in which the first surface 31 and the second surface 226 are coplanar.

As shown in FIG. 8, a straight line parallel to the thickness direction X of the wall portion is a reference line. An intersection line between a plane in which the reference line is located and the first weld face 2211 is a first intersection line Y1. An intersection line between the plane in which the reference line is located and the second surface 226 is a second intersection line Y2. That the first weld face 2211 is at an obtuse angle to the second surface 226 may be understood as: each first intersection line Y1 is at an obtuse angle to the second intersection line Y2.

An angle between the first weld face 2211 and the second surface 226 is defined as θ. That is, the angle between the first intersection line Y1 and the second intersection line Y2 is θ, satisfying: 90° < θ < 180°.

The first weld face 2211 is at an obtuse angle to the second surface 226. Therefore, the receptacle 221 forms a relatively large aperture at a position near the second surface 226, thereby facilitating the entry of the first blocking piece 30 into the receptacle 221 from the receptacle 221 aperture on the second surface 226.

In an embodiment in which the first weld face 2211 is at an obtuse angle to the second surface 226, the angle between the first weld face 2211 and the second surface 226 is θ, satisfying: 110° ≤ θ ≤ 160°.

For example, θ may be 110°, 115°, 120°, 125°, 130°, 135°, 140°, 145°, 150°, 155°, or the like.

If θ is overly small, the relatively large receptacle 221 aperture formed at the position near the second surface 226 is not a favorable option for the dimension of the electrode terminal 22 of an actual product. If θ is overly large, a relatively large aperture of the receptacle 221 can be formed at a position near the second surface 226 to facilitate the entry of the first blocking piece 30 into the receptacle 221, but the large aperture may impair the structural strength of the electrode terminal 22. Therefore, the angle falling within the range of 110° ≤ θ ≤ 160° not only produces a relatively large aperture of the receptacle 221 at a position near the second surface 226 and facilitates entry of the first blocking piece 30 into the receptacle 221, but also makes the structural strength of the electrode terminal 22 meet actual needs.

As shown in FIG. 8 and FIG. 9, in some embodiments, the first weld face 2211 is connected to the second surface 226.

Understandably, the first weld face 2211 is directly connected to the second surface 226.

The first weld face 2211 is connected to the second surface 226, so that the welding clearance 40 extends from the second surface 226 to the interior of the battery cell 20, thereby making the welding operation more convenient.

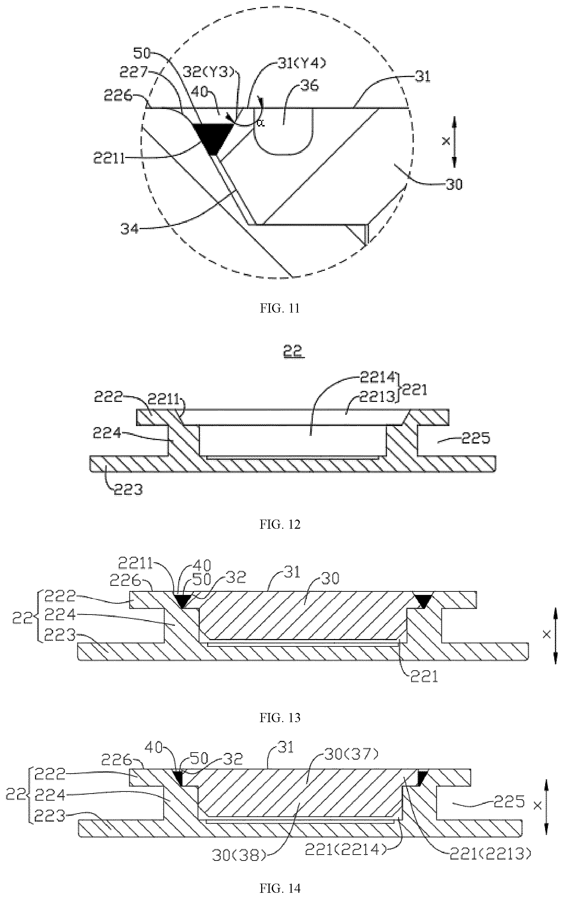

In some other embodiments, the first weld face 2211 may be indirectly connected to the second surface 226. As shown in FIG. 10 and FIG. 11, the first weld face 2211 is transitionally connected to the second surface 226 through a first transitional face 227. The first transitional face 227 may be a chamfer face or a fillet face 383. FIG. 11 shows a scenario in which the first transitional face 227 is a fillet face 383.

As shown in FIG. 11, in some embodiments, the first blocking piece 30 includes a first surface 31. The first surface 31 is a surface, farthest away from the interior of the battery cell along the thickness direction X of the wall portion, of the first blocking piece 30. The first surface 31 is flush with the second surface 226.

Understandably, the first surface 31 and the second surface 226 are coplanar, or, along the thickness direction X of the wall portion, the first surface 31 and the second surface 226 are at the same distance from the same position inside the battery cell 20.

The first surface 31 is flush with the second surface 226, thereby reducing the dimension of an integrated structure formed by the electrode terminal 22 and the first blocking piece 30 along the thickness direction X of the wall portion, and in turn, reducing the dimension of the battery cell 20 along the thickness direction X of the wall portion.

In some other embodiments, the first surface 31 may be closer to the interior of the battery cell 20 than the second surface 226, or the second surface 226 may be closer to the interior of the battery cell 20 than the first surface 31.

In some embodiments, the first weld face 2211 is a first conical face. Along the thickness direction X of the wall portion, a large end of the first weld face 2211 is farther away from the interior of the battery cell 20 than a small end of the first weld face 2211.

An extension direction of an axis of the first conical face may be parallel to the thickness direction X of the wall portion.

The first weld face 2211 is a first conical face. The large end of the first weld face 2211 is farther away from the interior of the battery cell 20 than the small end of the first weld face 2211. In this way, the size of the aperture of the receptacle 221 is relatively large at a position near a side of the electrode terminal 22, the side being oriented away from the interior of the battery cell 20, thereby facilitating the entry of the first blocking piece 30 into the receptacle 221.

To gradually increase the welding clearance 40 in the direction away from the interior of the battery cell 20 in the thickness direction X of the wall portion, in an embodiment in which the first weld face 2211 is a first conical face, as shown in FIG. 12 and FIG. 13, the second weld face 32 may be a second conical face. Along the thickness direction X of the wall portion, the small end of the second weld face 32 is farther away from the interior of the battery cell 20 than the large end of the second weld face 32. In this way, a welding clearance 40 that gradually increases along a direction away from the interior of the battery cell 20 is formed at a corresponding position between the first conical face and the second conical face. The cross-section of the welding clearance 40 may be triangular.

Alternatively, in an embodiment in which the first weld face 2211 is a first conical face, as shown in FIG. 12 and FIG. 14, the second weld face 32 may be a cylindrical face instead. A welding clearance 40 that gradually increases along a direction away from the interior of the battery cell 20 is formed at a corresponding position between the first conical face and the cylindrical second weld face 32. The cross-section of the welding clearance 40 may be right-triangular.

In some embodiments, the first conical face may be a pyramidal face. In these embodiments, both the large end and the small end of the first conical face are polygons. For example, both the large end and the small end of the first conical face are triangles, quadrilaterals, pentagons, hexagons, or the like.

In some other embodiments, the first conical face is a circular conical face. In these embodiments, both the large end and the small end of the first conical face are circles. The diameter of the large end of the first conical face is larger than the diameter of the small end of the first conical face. The axis of the circular conical face may coincide with the axis of the mounting hole 2111 or not.

The first conical face is a circular conical face, thereby making the processing operation easier. During the entry of the first blocking piece 30 into the receptacle 221, the structure of the circular conical face keeps the same along the circumferential direction. Therefore, the requirement on the positioning precision of the first blocking piece 30 relative to the receptacle 221 is not high, thereby facilitating the assembling of the first blocking piece 30 and the electrode terminal 22, and improving the assembling efficiency.

In some other embodiments, the first weld face 2211 may be a cylindrical face instead. The extension direction of an axis of the cylindrical face is parallel to the thickness direction X of the wall portion.

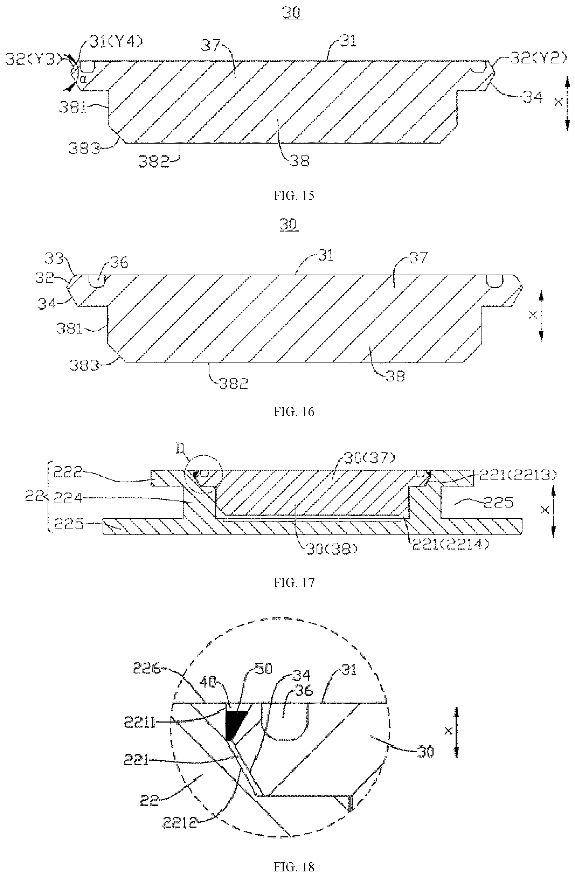

As shown in FIG. 15, in some embodiments, the first blocking piece 30 includes a first surface 31. The first surface 31 is a surface, farthest away from the interior of the battery cell 20 along the thickness direction X of the wall portion, of the first blocking piece 30. The second weld face 32 is at an obtuse angle to the first surface 31.

An intersection line between the plane in which the reference line is located and the second weld face 32 is a third intersection line Y3. An intersection line between the plane in which the reference line is located and the first surface 31 is a fourth intersection line Y4. That the second weld face 32 is at an obtuse angle to the first surface 31 may be understood as: the third intersection line Y3 is at an obtuse angle to the fourth intersection line Y4.

An angle between the second weld face 32 and the first surface 31 is defined as α. That is, the angle between the third intersection line Y3 and the fourth intersection line Y4 is α, satisfying: 90° < α < 180°. For example, α may be 100°, 105°, 110°, 120°, 130°, 130°, 140°, 150°, 160°, or the like.

The second weld face 32 is at an obtuse angle to the first surface 31, thereby facilitating formation of a relatively wide opened welding clearance 40 on a side oriented away from the interior of the battery cell 20, facilitating the entry of the welding gun into the welding clearance 40, and facilitating the welding between the electrode terminal 22 and the first blocking piece 30.

In some other embodiments, the second weld face 32 and the first surface 31 may be arranged vertically instead, that is, α = 90°.

As shown in FIG. 15, in some embodiments, the second weld face 32 is connected to the first surface 31.

Understandably, the second weld face 32 is directly connected to the first surface 31.

The second weld face 32 is connected to the first surface 31, so that the welding clearance 40 extends from the first surface 31 to the interior of the battery cell 20, thereby making the welding operation more convenient.

In some other embodiments, the second weld face 32 may be indirectly connected to the first surface 31. As shown in FIG. 16, the second weld face 32 is transitionally connected to the first surface 31 through a second transitional face 33. The second transitional face 33 may be a chamfer face or a fillet face 383. FIG. 16 shows a scenario in which the second transitional face 33 is a fillet face.

As shown in FIG. 15 and FIG. 16, in some embodiments, the second weld face 32 is a second conical face. Along the thickness direction X of the wall portion, a small end of the second weld face 32 is farther away from the interior of the battery cell 20 than a large end of the second weld face 32.

An extension direction of an axis of the second conical face may be parallel to the thickness direction X of the wall portion.

The second conical face may be a pyramidal face or a circular conical face.

In an embodiment in which the second conical face is a pyramidal face, both the large end and the small end of the second conical face are polygons. For example, both the large end and the small end of the second conical face are triangles, quadrilaterals, pentagons, hexagons, or the like.

In an embodiment in which the second conical face is a circular conical face, both the large end and the small end of the second conical face are circles. The diameter of the large end of the second conical face is larger than the diameter of the small end of the second conical face. The axis of the circular conical face may coincide with the axis of the mounting hole 2111 or not.

The second weld face 32 is a second conical face, and the small end of the second weld face 32 is farther away from the interior of the battery cell 20 than the large end of the second weld face 32, thereby facilitating formation of a relatively wide opened welding clearance 40, and facilitating the welding between the electrode terminal 22 and the first blocking piece 30.

In order for the welding clearance 40 to gradually increase along a direction away from the interior of the battery cell 20 in the thickness direction X of the wall portion, as shown in FIG. 17 and FIG. 18, in an embodiment in which the second weld face 32 is a second conical face, the first weld face 2211 may be a cylindrical face instead. A welding clearance 40 that gradually increases along the direction away from the interior of the battery cell 20 is formed at a corresponding position between the second conical face and the cylindrical first weld face 2211. The cross-section of the welding clearance 40 is right-triangular.

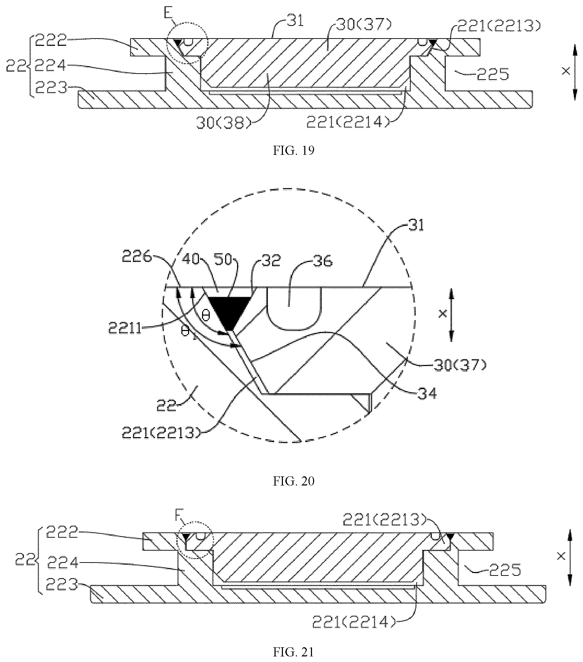

Definitely, as shown in FIG. 19 and FIG. 20, 2211 in an embodiment in which the second weld face 32 is a second conical face, the first weld face 2211 may be a first conical face. Along the thickness direction X of the wall portion, the large end of the first conical face is farther away from the interior of the battery cell 20 than the small end of the first conical face. In this way, a welding clearance 40 that gradually increases along the direction away from the interior of the battery cell 20 is formed at a corresponding position between the first conical face and the second conical face. The cross-section of the welding clearance 40 is triangular.

As shown in FIG. 20, in an embodiment in which the second weld face 32 is a second conical face, the first weld face 2211 is a first conical face. Along the thickness direction X of the wall portion, a large end of the first weld face 2211 is farther away from the interior of the battery cell 20 than a small end of the first weld face 2211. The first blocking piece 30 further includes a third conical face 34. The third conical face 34 is disposed opposite to the first conical face. The third conical face 34 is connected to a large end of the second conical face.

A large end of the third conical face 34 is farther away from the interior of the battery cell 20 than a small end of the third conical face. The large end of the third conical face 34 is directly connected to the large end of the second conical face.

A part of the first conical face is disposed corresponding to the second weld to form a welding clearance 40. Another part of the first conical face is disposed opposite to the third conical face 34. An angle between the third conical face 34 and the second surface 226 is θ₁. θ₁ may be the same as or different from θ. FIG. 20 shows a scenario in which θ₁ is equal to θ so that the third conical face 34 can better fit the first conical face.

The first weld face 2211 is a first conical face, and the large end of the first weld face 2211 is farther away from the interior of the battery cell 20 than the small end of the first weld face 2211. The second conical face and a part of the first conical face form the welding clearance 40. In the thickness direction X of the wall portion, the welding clearance 40 gradually increases along the direction away from the interior of the battery cell 20. Therefore, the dimension of the welding clearance 40 is relatively large at an end close to the first surface 31, thereby providing a relatively large space for a welding gun, facilitating the welding gun to enter the welding clearance 40, and facilitating welding. The third conical face 34 is disposed opposite to the first conical face, thereby making the shape of the first blocking piece 30 fit the shape of the receptacle 221 more closely, and facilitating assembling.

In some embodiments, the second conical face is a circular conical face; and/or the third conical face 34 is a circular conical face.

Only one of the second conical face or the third conical face 34 is a circular conical face. For example, the second conical face is a circular conical face, and the third conical face 34 is a pyramidal face; or, the third conical face 34 is a circular conical face, and the second conical face is a pyramidal face. Alternatively, both the second conical face and the third conical face 34 are circular conical faces.

During actual production, the circular conical face is easier to process. The second conical face and/or the third conical face 34 is a circular conical face. Therefore, during the entry of the first blocking piece 30 into the receptacle 221, the structure of the circular conical face keeps the same along the circumferential direction. Therefore, the requirement on the positioning precision of the first blocking piece 30 relative to the receptacle 221 is not high, thereby facilitating the assembling of the first blocking piece 30 and the electrode terminal 22, and improving the assembling efficiency.

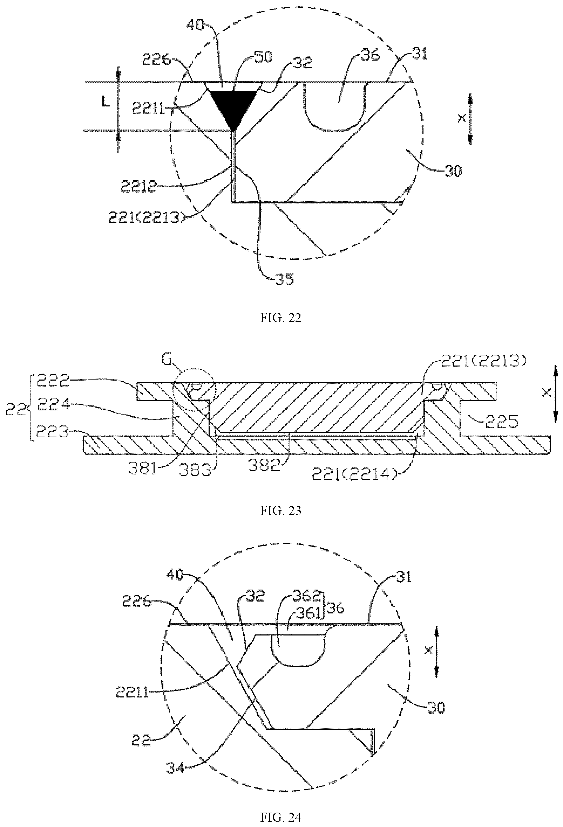

As shown in FIG. 21 and FIG. 22, in an embodiment in which the second weld face 32 is a second conical face, the first blocking piece 30 further includes a first lateral face 35. The first lateral face 35 is connected to the large end of the second weld face 32. The sidewall of the receptacle 221 further includes a first lateral wall face 2212. Along the thickness direction X of the wall portion, the first lateral wall face 2212 is closer to the interior of the battery cell 20 than the first weld face 2211. The first lateral wall face 2212 is connected to one end of the first weld face 2211, the end being close to the interior of the battery cell 20. The first lateral wall face 2212 is arranged opposite to the first lateral face 35. Both the first lateral wall face 2212 and the first lateral face 35 are cylindrical faces extending along the thickness direction X of the wall portion.

Along the thickness direction X of the wall portion, the first lateral wall face 2212 is closer to the interior of the battery cell 20 than the first weld face 2211. In an embodiment in which the first weld face 2211 is a first conical face, the first lateral wall face 2212 is directly connected to the small end of the first weld face 2211. In an embodiment in which the first conical face is a circular conical face, the diameter of the first lateral wall face 2212 may be the same as the diameter of the small end of the first conical face.

The first lateral wall face 2212 may be in close fit with, or in clearance fit with, the first lateral face 35.

Both the first lateral wall face 2212 and the first lateral face 35 are cylindrical faces extending along the thickness direction X of the wall portion. The cylindrical faces are easier to process.

As shown in FIG. 20 and FIG. 22, in some embodiments, along the thickness direction X of the wall portion, a maximum dimension of the welding clearance 40 is L, satisfying: 0.1 mm ≤ L ≤ 0.7 mm.

In an embodiment in which the first blocking piece 30 is fully accommodated in the receptacle 221 along the thickness direction X of the wall portion, the maximum dimension L of the welding clearance 40 along the thickness direction X of the wall portion is a distance between one end farthest away from the interior of the battery cell 20 and one end closest to the interior of the battery cell 20 of the second weld face 32 along the thickness direction X of the wall portion.

In an embodiment in which a part of the first blocking piece 30 is accommodated in the receptacle 221 along the thickness direction X of the wall portion, the maximum dimension L of the welding clearance 40 along the thickness direction X of the wall portion is a distance between one end of the first weld face 2211 and one end of the second weld face 32, where the one end of the first weld face is an end farthest away from the interior of the battery cell 20 along the thickness direction X of the wall portion, and the one end of the second weld face is an end closest to the interior of the battery cell 20 along the thickness direction X of the wall portion. In this embodiment, the welding portion 50 may exceed the second surface 226 of the electrode terminal 22 along the thickness direction X of the wall portion, but without exceeding the first surface 31 of the first blocking piece 30.

L may be 0.1 mm, 0.15 mm, 0.2 mm, 0.25 mm, 0.3 mm, 0.35 mm, 0.45 mm, 0.5 mm, 0.55 mm, 0.6 mm, 0.65 mm, 0.7 mm, or the like.

If L is greater than 0.1 mm, the dimension of the welding clearance 40 along the thickness direction X of the wall portion is relatively small. In order to prevent the welding portion 50 from exceeding the first surface 31 along the thickness direction X of the wall portion, the dimension of the welding portion 50 in the thickness direction X of the wall portion is also relatively small, thereby possibly leading to insufficient welding strength. If L is greater than 0.7 mm, the dimension of the welding clearance 40 along the thickness direction X of the wall portion is relatively large, thereby increasing the difficulty of welding. Therefore, the value of L is set to fall within the range of 0.1 mm ≤ L ≤ 0.7 mm, thereby making the dimension of the welding portion 50 meet the requirement on the welding strength for the electrode terminal 22 and the first blocking piece 30, and making the welding less difficult.

As shown in FIG. 19 to FIG. 22, in some embodiments, the first blocking piece 30 includes a first surface 31. The first surface 31 is a surface, farthest away from the interior of the battery cell 20 along the thickness direction X of the wall portion, of the first blocking piece 30. Further, a groove 36 is created on the first surface 31, and the groove 36 is arranged around an axis parallel to the thickness direction X of the wall portion.

The groove 36 is an annular groove arranged around the axis parallel to the thickness direction X of the wall portion. The cross-section of the groove 36 may be U-shaped.

The groove 36 can release the welding stress during the welding of the electrode terminal 22 and the first blocking piece 30, improve the welding quality, alleviate the deformation of the first blocking piece 30 and the electrode terminal 22 during the welding, improve the welding stress status in the circumferential direction of the first blocking piece 30, and reduce the risk caused by weld cracks.

As shown in FIG. 23 and FIG. 24, the groove 36 is a stepped groove. The groove 36 includes a first section 361 and a second section 362. Along the thickness direction X of the wall portion, the first section 361 is closer to the first surface 31 than the second section 362. The first section 361 extends to the second weld face 32. The second section 362 is recessed from a groove bottom wall of the first section 361 in a direction away from the first surface 31.

Referring to FIG. 12, FIG. 19, FIG. 21, and FIG. 23, in some embodiments, the receptacle 221 is a stepped groove. The receptacle 221 includes a first receptacle section 2213 and a second receptacle section 2214 connected to each other. The first receptacle section 2213 is farther away from the interior of the battery cell 20 than the second receptacle section 2214. At least a part of the first blocking piece 30 is accommodated in the first receptacle section 2213. The first weld face 2211 is at least a part of a sidewall of the first receptacle section 2213.

Along the thickness direction X of the wall portion, one end of the first receptacle section 2213 extends to the second surface 226 of the electrode terminal 22. The second receptacle section 2214 is recessed from the bottom wall of the first receptacle section 2213 toward the interior of the battery cell 20. The structure of the first receptacle section 2213 may be the same as or different from the structure of the second receptacle section 2214. The first receptacle section 2213 and the second receptacle section 2214 may be circular grooves, square grooves, or the like.

The first blocking piece 30 may be accommodated in the first receptacle section 2213 alone. Alternatively, a part of the first blocking piece 30 is accommodated in the first receptacle section 2213, and another part of the first blocking piece extends into the second receptacle section 2214.

As shown in FIG. 19 and FIG. 20, the sidewall of the first receptacle section 2213 is the first weld face 2211. In other words, the first weld face 2211 is the entire sidewall of the first receptacle section. As shown in FIG. 21 and FIG. 22, in an embodiment in which the sidewall of the receptacle 221 includes a first weld face 2211 and a first lateral wall face 2212, the first weld face 2211 and the first lateral wall face 2212 together form the sidewall of the first receptacle section 2213. Therefore, the first weld face 2211 is a part of the sidewall of the first receptacle section 2213.

The receptacle 221 is a stepped groove, thereby not only reducing the dimension of the electrode terminal 22 along the thickness direction X of the wall portion, facilitating the welding of the electrode terminal 22 to a tab 61 inside the battery cell 20, but also reducing the weight of the electrode terminal 22, and in turn, reducing the weight of the battery cell 20.

In some other embodiments, the receptacle 221 may include only the first receptacle section 2213.

Still referring to FIG. 19 and FIG. 21, in some embodiments, the first blocking piece 30 includes a body portion 37 and an extension portion 38 connected to each other. The body portion 37 is accommodated in the first receptacle section 2213 and abuts against a bottom wall of the first receptacle section 2213. The extension portion 38 extends from the body portion 37 into the second receptacle section 2214. The second weld face 32 is at least a part of an outer peripheral surface of the body portion 37.

The first surface 31 is a surface, farthest away from the interior of the battery cell 20 along the thickness direction X of the wall portion, of the body portion 37.

As shown in FIG. 19 and 20, in an embodiment in which the first blocking piece 30 includes a second weld face 32 and a third conical face 34, the second weld face 32 and the third conical face 34 together form an outer peripheral surface of the body portion 37. As shown in FIG. 21 and FIG. 22, in an embodiment in which the first blocking piece 30 includes a second weld face 32 and a first lateral face 35, the second weld face 32 and the first lateral face 35 together form the outer peripheral surface of the body portion 37.

The body portion 37 is accommodated in the first receptacle section 2213 and abuts against the bottom wall of the first receptacle section 2213, thereby restricting the first blocking piece 30 from further moving closer to the interior of the battery cell 20 in the thickness direction X of the wall portion, and facilitating electrical connection between the busbar component and the first blocking piece 30. The extension portion 38 extends from the body portion 37 into the second receptacle section 2214, and is in positional fit with the second receptacle section 2214, thereby favorably maintaining a stable relative positional relationship between the first blocking piece 30 and the electrode terminal 22.

In some other embodiments, the first blocking piece 30 may include only a main portion accommodated in the first receptacle section 2213.

Referring to FIG. 15, FIG. 16, FIG. 19, FIG. 21, and FIG. 23, in some embodiments, the extension portion 38 includes a second lateral face 381 and a third surface 382 that is closest to the interior of the battery cell 20 along the thickness direction X of the wall portion. The second lateral face 381 is connected to the third surface 382 by a bevel face 383.

The second lateral face 381 is arranged around an axis parallel to the thickness direction X of the wall portion. The first lateral face 35 is disposed opposite to the sidewall of the second receptacle section 2214. The second lateral face 381 may be a surface that matches the sidewall of the second receptacle section 2214. For example, if the sidewall of the second receptacle section 2214 is a cylindrical face, then the second lateral face 381 may be a cylindrical face. For another example, if the sidewall of the second receptacle section 2214 is a prism face, then the second lateral face 381 may be a prism face. As an example, the sidewall of the second receptacle section 2214 is a hexagonal prism face, and therefore, the second lateral face 381 may be a hexagonal prism face.

The third surface 382 is also a surface, closest to the interior of the battery cell 20 along the thickness direction X of the wall portion, of the second blocking piece 70.

The bevel face 383 may be a fillet face or a chamfer face. FIG. 15. FIG. 16, FIG. 19, FIG. 21, and FIG. 23 all show scenarios in which the bevel face 383 is a chamfer face.

The third surface 382 is connected to the second lateral face 381 by a bevel face 383. The bevel face 383 not only eliminates the burrs at the end of the extension portion 38, but also plays a guiding role when the first blocking piece 30 enters the receptacle 221, and makes the first blocking piece 30 enter the receptacle 221 smoothly.

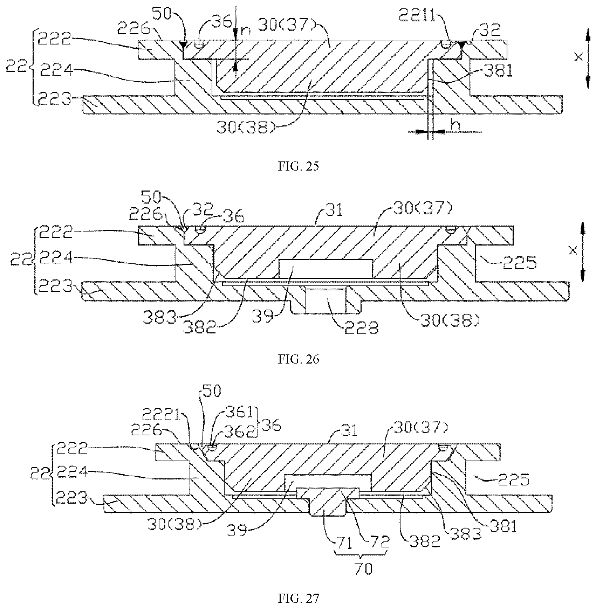

As shown in FIG. 25, in some embodiments, the sidewall of the second receptacle section 2214 is spaced apart from the outer peripheral surface of the extension portion 38.

The second receptacle section 2214 is in clearance fit with the extension portion 38. The sidewall of the second receptacle section 2214 is at a distance from the outer peripheral surface of the extension portion 38. In these embodiments, the sidewall of the second receptacle section 2214 is at a distance from the second lateral face 381 of the extension portion 38.

The sidewall of the second receptacle section 2214 is spaced apart from the outer peripheral surface of the extension portion 38, thereby facilitating the assembling of the first blocking piece 30 and the electrode terminal 22.

Still referring to FIG. 25, in some embodiments, a distance between the sidewall of the second receptacle section 2214 and the outer peripheral surface of the extension portion 38 is h, satisfying: 0.03 mm ≤ h ≤ 0.1 mm.

The distance h between the sidewall of the second receptacle section 2214 and the outer peripheral surface of the extension portion 38 is also the distance between the sidewall of the second receptacle section 2214 and the second lateral face 381 of the extension portion 38. The value of h may be 0.03 mm, 0.04 mm, 0.05 mm, 0.06 mm, 0.07 mm, 0.08 mm, 0.09 mm, 0.1 mm, or the like.

If h is less than 0.03 mm, the distance between the sidewall of the second receptacle section 2214 and the outer peripheral surface of the extension portion 38 is overly small and hardly controllable, imposes a higher requirement on the processing precision of the first blocking piece 30 and the electrode terminal 22, and increases the difficulty of processing. If h is greater than 0.1 mm, the distance between the sidewall of the second groove section 2214 and the outer peripheral surface of the extension portion 38 is overly large, thereby being prone to a relatively large displacement toward one side during the welding of the first blocking piece 30 and the electrode terminal 22, making the welding uneven, and impairing the welding quality. Therefore, the value of h is set to fall within the range of 0.03 mm ≤ h ≤ 0.1 mm, thereby making the distance between the sidewall of the second receptacle section 2214 and the outer peripheral surface of the extension portion 38 fall within an easily controllable range, and also making the space relatively small in which the first blocking piece 30 is movable in the second receptacle section 2214 during the welding of the electrode terminal 22 and the first blocking piece 30, and in turn, improving the evenness and quality of the welding.

As shown in FIG. 25, in some embodiments, along the thickness direction X of the wall portion, a dimension of the body portion 37 is n, satisfying: 0.7 mm ≤ n ≤ 1.5 mm.

The dimension n of the body portion 37 along the thickness direction X of the wall portion means a distance from the first surface 31 to a surface of the body portion 37 along the thickness direction X of the wall portion, where the surface abuts against the bottom wall of the first receptacle section 2213; or the dimension n means a distance between the first surface 31 and the bottom wall of the first receptacle section 2213.

The value of n may be 0.7 mm, 0.8 mm, 0.9 mm, 1.0 mm, 1.1 mm, 1.2 mm, 1.3 mm, 1.4 mm, 1.5 mm, or the like.

If n is less than 0.7 mm, the strength of the body portion 37 is not enough to meet the actual use requirements. If n is greater than1.5 mm, the dimension of the body portion 37 along the thickness direction X of the wall portion is overlarge, thereby increasing the size of the battery cell 20. Therefore, the value of n is set to fall within the range of 0.7 mm ≤ n ≤ 1.5 mm, thereby not only making the dimension of the battery cell 20 along the thickness direction X of the wall portion fall within a reasonable range, but also ensuring sufficient structural strength of the body portion 37.

Referring to FIG. 26, in some embodiments, an injection hole 228 is created on the electrode terminal 22. The injection hole 228 communicates with the receptacle 221 and the interior of the battery cell 20.

In this embodiment, the injection hole 228 is created on the bottom wall of the second receptacle section 2214, and penetrates the bottom wall of the second receptacle section 2214. In some other embodiments, the injection hole 228 may be created on the sidewall of the receptacle 221. For example, the injection hole 228 is created on the sidewall of the second receptacle section 2214, and extends to one side of the second abutment portion 223, the side being oriented away from the connecting portion 224. The injection hole 228 is configured to allow an electrolyte solution to enter the shell 21. Specifically, the electrolyte solution enters the receptacle 221 and then is injected into the shell 21 through the injection hole 228.

The injection hole 228 is created on the electrode terminal 22, thereby making the processing operation more convenient, and avoiding positioning of the injection hole 228 on the shell 21 that impairs the structural strength of the shell 21.

When the welding portion 50 assumes a ring structure, the first blocking piece 30 can serve to block the injection hole 228, and reduce the risk of an electrolyte leak and the risk that external impurities enter the shell 21 through the receptacle 221 and the injection hole 228.

In some other embodiments, the injection hole 228 may be created on the wall portion 211 instead.

As shown in FIG. 27, in some embodiments, the battery cell 20 further includes a second blocking piece 70. At least a part of the second blocking piece 70 is inserted in the injection hole 228 to block the injection hole 228.

The second blocking piece 70 may be a rubber nail. The second blocking piece 70 is inserted in the injection hole 228. The wall of the injection hole 228 can deform the second blocking piece 70, so that the second blocking piece 70 is hermetically disposed in the injection hole 228. Definitely, the wall of the injection hole 228 may closely fit the surface of the second blocking piece 70. The wall of the injection hole 228 may cause no deformation of the second blocking piece 70.

The second blocking piece 70 may be partially inserted in the injection hole 228, or fully inserted in the injection hole 228.

The second blocking piece 70 blocks the injection hole 228, thereby reducing the risk of an electrolyte leak of the battery cell 20, and reducing the risk that the welding slag falls from the injection hole 228 into the battery cell 20 during the welding of the first blocking piece 30 and the electrode terminal 22. The second blocking piece 70 can also play a role in heat insulation and reduce the damage caused by high temperature to the internal structure and materials of the battery cell 20 during the welding of the first blocking piece 30 and the electrode terminal 22.

The second blocking piece 70 may assume various structural forms. For example, as shown in FIG. 27, in some embodiments, the second blocking piece 70 includes a blocking portion 71 and a constraining portion 72. The blocking portion 71 is inserted in the injection hole 228. The constraining portion 72 is connected to one end of the blocking portion 71 and located in the receptacle 221. The constraining portion 72 is configured to abut against a bottom wall of the receptacle 221.

In an embodiment in which the injection hole 228 is created on the bottom wall of the second receptacle section 2214, the constraining portion 72 abuts against the bottom wall of the second receptacle section 2214 of the receptacle 221. The constraining portion 72 is located on a side of the bottom wall of the second receptacle section 2214, the side being away from the interior of the battery cell 20.

The constraining portion 72 of the second blocking piece 70 abuts against the bottom wall of the receptacle 221, thereby constraining the second blocking piece 70 from moving toward the interior of the battery cell 20, and reducing the risk that the second blocking piece 70 falls into the interior of the battery cell 20.

Still referring to FIG. 27, in some embodiments, a clearance portion 39 is disposed on the first blocking piece 30. The clearance portion 39 is configured to accommodate a part of the second blocking piece 70.

A part of the second blocking piece 70 is inserted in the injection hole 228, and another part of the second blocking piece 70 is located in the receptacle 221. The clearance portion 39 is a clearance groove created on the first blocking piece 30. The part, located in the receptacle 221, of the second blocking piece 70 is accommodated in the clearance portion 39. In these embodiments, the constraining portion 72 of the second blocking piece 70 is accommodated in the receptacle 221. The clearance portion 39 is recessed from a surface of the first blocking piece 30 away from the interior of the battery cell 20, the surface being closest to the interior of the battery cell 20. At least a part of the constraining portion 72 is accommodated in the clearance portion 39. The constraining portion 72 may be partially accommodated in the clearance portion 39, or may be fully accommodated in the clearance portion 39. In an embodiment in which the injection hole 228 is created on the bottom wall of the second receptacle section 2214, in a case that a part of the second blocking piece 70 is accommodated in the clearance portion 39, the surface (the third surface 382), closest to the interior of the battery cell 20, of the first blocking piece 30 may abut on, or be spaced apart from, the bottom wall of the second receptacle section 2214 along the thickness direction X of the wall portion.

The clearance portion 39 can reduce the risk of interference between the second blocking piece 70 and the first blocking piece 30. The clearance portion 39 accommodates a part of the second blocking piece 70, that is, a part of the second blocking piece 70 is embedded in the first blocking piece 30, thereby reducing the size of the integrated structure formed by the first blocking piece 30 and the second blocking piece 70.

In some other embodiments, no clearance portion 39 is disposed on the first blocking piece 30. Along the thickness direction X of the wall portion, the surface (the third surface 382), closest to the interior of the battery cell 20, of the first blocking piece 30 may abut on, or be spaced apart from, a surface of the second blocking piece 70, the surface being farthest away from the interior of the battery cell 20. For example, the third surface 382 of the first blocking piece 30 abuts on, or is spaced apart from, a surface of the constraining portion 72, the surface being oriented away from the blocking portion 71.

An embodiment of this application further provides a battery 100, including the battery cell 20 according to any embodiment described above.

The battery 100 may include a plurality of battery cells 20. The plurality of battery cells 20 are connected in series, parallel, or series-and-parallel pattern by a busbar component. The busbar component is welded to the first surface 31 of the first blocking piece 30 of the battery cell 20.

A welding portion 50 is formed by welding the electrode terminal 22 to the first blocking piece 30 in the battery cell 20 disclosed in an embodiment of the first aspect, and the welding portion does not exceed the first surface 31 of the first blocking piece 30. Therefore, in a process of connecting the busbar component to the first surface 31 (for example, by welding), the welding portion 50 will not interfere with the busbar component. In this way, a stable connection is formed between the busbar component and the first surface 31, thereby forming a stable electrical connection between the first blocking piece 30 and the busbar component, and improving the stability of electrical energy output by the battery 100.

An embodiment of this application further provides an electrical device. The electrical device includes the battery 100 disclosed in the foregoing embodiment.

The battery 100 provides electrical energy for the electrical device so that the electrical device can function normally.

The battery 100 disclosed in the foregoing embodiment can stably output electric energy, thereby ensuring the electrical device to work stably.

An embodiment of this application provides a cylindrical battery. The cylindrical battery includes a shell 21, an electrode terminal 22, a first blocking piece 30, an electrode assembly 60, and a second blocking piece 70. The electrode terminal 22 is dielectrically disposed on a wall portion 211 of the shell 21. The electrode terminal 22 is configured to be electrically connected to a tab 61 of the electrode assembly 60. Along the thickness direction X of the wall portion, a receptacle 221 is created on a second surface 226 of the electrode terminal 22, the second surface being farthest away from the interior of the battery cell 20. The receptacle 221 is a stepped groove. The receptacle 221 includes a first receptacle section 2213 and a second receptacle section. The first receptacle section 2213 is farther away from the interior of the battery cell 20 than the second receptacle section 2214. The first weld face 2211 is a sidewall of the first receptacle section 2213. The first weld face 2211 is a circular conical face. A large end of the first weld face 2211 is connected to the second surface 226. A small end of the first weld face 2211 is connected to a bottom wall of the first receptacle section 2213. The first blocking piece 30 includes a body portion 37 and an extension portion 38 connected to each other. The body portion 37 is accommodated in the first receptacle section 2213. A surface, connected to the extension portion 38, of the body portion 37 abuts against the bottom wall of the first receptacle section 2213. The extension portion 38 extends into the second receptacle section 2214. Along the thickness direction X of the wall portion, a first surface 31, farthest away from the interior of the battery cell 20, of the body portion 37, is configured to be welded to a busbar component. An outer peripheral surface of the body portion 37 includes a second weld face 32 and a third conical face 34. Both the second weld face 32 and the third conical face 34 are circular conical faces. A small end of the second weld face 32 is directly or indirectly connected to the first surface 31. A large end of the second weld face 32 is connected to a large end of the third conical face 34. A welding clearance 40 is formed between a part of the first weld face 2211 and the second weld face 32. The electrode terminal 22 is welded to the first blocking piece 30 to form a welding portion 50 located in the welding clearance 40. The welding portion 50 is connected to the first weld face 2211 and the second weld face 32. Along the thickness direction X of the wall portion, the welding portion 50 does not exceed the first surface 31. Another part of the first weld face 2211 is arranged opposite to the third conical face 34. Along the thickness direction X of the wall portion, a third surface 382, oriented away from the body portion 37, of the extension portion 38 is connected to the outer peripheral surface (a second lateral face 381) of the extension portion 38 by a bevel face 383. An injection hole 228 is created on a bottom wall of the second receptacle section 2214. A blocking portion 71 of the second blocking piece 70 is inserted in the injection hole 228. A constraining portion 72 of the second blocking piece 70 is connected to one end of the blocking portion 71 and located in the second receptacle section 2214. The constraining portion 72 abuts against the bottom wall of the second receptacle section 2214. A clearance portion 39 is disposed on the third surface 382 of the extension portion 38. At least a part of the constraining portion 72 is accommodated in the clearance portion 39.

An embodiment of this application provides a cylindrical battery. The cylindrical battery includes a shell 21, an electrode terminal 22, a first blocking piece 30, an electrode assembly 60, and a second blocking piece 70. The electrode terminal 22 is dielectrically disposed on a wall portion 211 of the shell 21. The electrode terminal 22 is configured to be electrically connected to a tab 61 of the electrode assembly 60. Along the thickness direction X of the wall portion, a receptacle 221 is created on a second surface 226 of the electrode terminal 22, the second surface being farthest away from the interior of the battery cell 20. The receptacle 221 is a stepped groove. The receptacle 221 includes a first receptacle section 2213 and a second receptacle section. The first receptacle section 2213 is farther away from the interior of the battery cell 20 than the second receptacle section 2214. A sidewall of the first receptacle section 2213 includes a first weld face 2211 and a first lateral wall face 2212. The first weld face 2211 is a circular conical face, and the second lateral wall face is a cylindrical face. A large end of the first weld face 2211 is connected to the second surface 226. A small end of the first weld face 2211 is connected to the first lateral wall face 2212. An end, away from the first weld face 2211, of the first lateral wall face 2212 is connected to the bottom wall of the first receptacle section 2213. The first blocking piece 30 includes a body portion 37 and an extension portion 38 connected to each other. The body portion 37 is accommodated in the first receptacle section 2213. A surface, connected to the extension portion 38, of the body portion 37 abuts against the bottom wall of the first receptacle section 2213. The extension portion 38 extends into the second receptacle section 2214. Along the thickness direction X of the wall portion, a first surface 31, farthest away from the interior of the battery cell 20, of the body portion 37, is configured to be welded to a busbar component. An outer peripheral surface of the body portion 37 includes a second weld face 32 and a first lateral face 35. The second weld face 32 is a circular conical face, and the second lateral face 381 is a cylindrical face. A small end of the second weld face 32 is directly or indirectly connected to the first surface 31. A large end of the second weld face 32 is connected to the first lateral face 35. The first lateral face 35 is arranged opposite to the first lateral wall face 2212. A welding clearance 40 is formed between a part of the first weld face 2211 and the second weld face 32. The electrode terminal 22 is welded to the first blocking piece 30 to form a welding portion 50 located in the welding clearance 40. The welding portion 50 is connected to the first weld face 2211 and the second weld face 32. Along the thickness direction X of the wall portion, the welding portion 50 does not exceed the first surface 31. Another part of the first weld face 2211 is arranged opposite to the third conical face 34. Along the thickness direction X of the wall portion, a third surface 382, oriented away from the body portion 37, of the extension portion 38 is connected to the outer peripheral surface (a second lateral face 381) of the extension portion 38 by a bevel face 383. An injection hole 228 is created on a bottom wall of the second receptacle section 2214. A blocking portion 71 of the second blocking piece 70 is inserted in the injection hole 228. A constraining portion 72 of the second blocking piece 70 is connected to one end of the blocking portion 71 and located in the second receptacle section 2214. The constraining portion 72 abuts against the bottom wall of the second receptacle section 2214. A clearance portion 39 is disposed on the third surface 382 of the extension portion 38. At least a part of the constraining portion 72 is accommodated in the clearance portion 39.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A battery cell, comprising:
a shell, comprising a wall portion,
an electrode terminal, disposed on the wall portion, wherein a receptacle is disposed on a surface of the electrode terminal, the surface is oriented away from an interior of the battery cell along a thickness direction of the wall portion, and a sidewall of the receptacle comprises a first weld face; and
a first blocking piece, at least partially accommodated in the receptacle, wherein the first blocking piece comprises a second weld face, a welding clearance is formed between the second weld face and the first weld face, the first blocking piece is welded to the electrode terminal to form a welding portion, and the welding portion is connected to the first weld face and the second weld face and at least partially located within the welding clearance.

2. The battery cell according to claim 1, wherein the first blocking piece comprises a first surface, the first surface is a surface, farthest away from the interior of the battery cell along the thickness direction of the wall portion, of the first blocking piece, and the welding portion does not exceed the first surface.

3. The battery cell according to claim 1 or 2, wherein, in the thickness direction of the wall portion, the welding clearance gradually increases along a direction away from the interior of the battery cell.

4. The battery cell according to claim 2 or 3, wherein, along the thickness direction of the wall portion, the electrode terminal comprises a second surface farthest away from the interior of the battery cell, the receptacle is recessed from the second surface toward the interior of the battery cell, and the first weld face is at an obtuse angle to the second surface.

5. The battery cell according to claim 4, wherein an angle between the first weld face and the second surface is θ, satisfying: 110° ≤ θ ≤ 160°.

6. The battery cell according to claim 4 or 5, wherein the first weld face is connected to the second surface.

7. The battery cell according to any one of claims 4 to 6, wherein the first blocking piece comprises the first surface, the first surface is a surface, farthest away from the interior of the battery cell along the thickness direction of the wall portion, of the first blocking piece, and the first surface is flush with the second surface.

8. The battery cell according to any one of claims 1 to 7, wherein the first weld face is a first conical face, and, along the thickness direction of the wall portion, a large end of the first weld face is farther away from the interior of the battery cell than a small end of the first weld face.

9. The battery cell according to claim 8, wherein the first conical face is a circular conical face.

10. The battery cell according to any one of claims 1 to 9, wherein the first blocking piece comprises a first surface, the first surface is a surface, farthest away from the interior of the battery cell along the thickness direction of the wall portion, of the first blocking piece, and the second weld face is at an obtuse angle to the first surface.

11. The battery cell according to claim 10, wherein the second weld face is connected to the first surface.

12. The battery cell according to any one of claims 1 to 11, wherein the second weld face is a second conical face, and, along the thickness direction of the wall portion, a small end of the second weld face is farther away from the interior of the battery cell than a large end of the second weld face.

13. The battery cell according to claim 12, wherein the first weld face is a first conical face, and, along the thickness direction of the wall portion, a large end of the first weld face is farther away from the interior of the battery cell than a small end of the first weld face; and
the first blocking piece further comprises a third conical face, the third conical face is disposed opposite to the first conical face, and the third conical face is connected to a large end of the second conical face.

14. The battery cell according to claim 13, wherein the second conical face is a circular conical face; and/or the third conical face is a circular conical face.

15. The battery cell according to claim 12, wherein the first blocking piece further comprises a first lateral face, and the first lateral face is connected to the large end of the second weld face;
the sidewall of the receptacle further comprises a first lateral wall face, and, along the thickness direction of the wall portion, the first lateral wall face is closer to the interior of the battery cell than the first weld face, and the first lateral wall face is connected to one end of the first weld face, the end being close to the interior of the battery cell; and
the first lateral wall face is arranged opposite to the first lateral face, and both the first lateral wall face and the first lateral face are cylindrical faces extending along the thickness direction of the wall portion.

16. The battery cell according to any one of claims 1 to 15, wherein, along the thickness direction of the wall portion, a maximum dimension of the welding clearance is L, satisfying: 0.1 mm ≤ L ≤ 0.7 mm.

17. The battery cell according to any one of claims 2 to 16, wherein the first blocking piece comprises the first surface, the first surface is a surface, farthest away from the interior of the battery cell along the thickness direction of the wall portion, of the first blocking piece, a groove is further created on the first surface, and the groove is arranged around an axis parallel to the thickness direction of the wall portion.

18. The battery cell according to any one of claims 1 to 17, wherein the receptacle is a stepped groove, the receptacle comprises a first receptacle section and a second receptacle section connected to each other, the first receptacle section is farther away from the interior of the battery cell than the second receptacle section, at least a part of the first blocking piece is accommodated in the first receptacle section, and the first weld face is at least a part of a sidewall of the first receptacle section.

19. The battery cell according to claim 18, wherein the first blocking piece comprises a body portion and an extension portion connected to each other, the body portion is accommodated in the first receptacle section and abuts against a bottom wall of the first receptacle section, the extension portion extends from the body portion into the second receptacle section, and the second weld face is at least a part of an outer peripheral surface of the body portion.

20. The battery cell according to claim 19, wherein the extension portion comprises a second lateral face and a third surface closest to the interior of the battery cell along the thickness direction of the wall portion, and the second lateral face is connected to the third surface by a bevel face.

21. The battery cell according to claim 19 or 20, wherein a sidewall of the second receptacle section is spaced apart from an outer peripheral surface of the extension portion.

22. The battery cell according to claim 21, wherein a distance between the sidewall of the second receptacle section and the outer peripheral surface of the extension portion is h, satisfying: 0.03 mm ≤ h ≤ 0.1 mm.

23. The battery cell according to any one of claims 19 to 22, wherein, along the thickness direction of the wall portion, a dimension of the body portion is n, satisfying: 0.7 mm ≤ n ≤ 1.5 mm.

24. The battery cell according to any one of claims 1 to 23, wherein an injection hole is created on the electrode terminal, and the injection hole communicates with the receptacle and the interior of the battery cell.

25. The battery cell according to claim 24, wherein the battery cell further comprises a second blocking piece, and at least a part of the second blocking piece is inserted in the injection hole to block the injection hole.

26. The battery cell according to claim 25, wherein the second blocking piece comprises a blocking portion and a constraining portion, the blocking portion is inserted in the injection hole, the constraining portion is connected to one end of the blocking portion and located in the receptacle, and the constraining portion is configured to abut against a bottom wall of the receptacle.

27. The battery cell according to claim 25 or 26, wherein a clearance portion is disposed on the first blocking piece, and the clearance portion is configured to accommodate a part of the second blocking piece.

28. A battery, comprising the battery cell according to any one of claims 1 to 27.

29. An electrical device, comprising the battery according to claim 28.
